# EUROPEAN PATENT APPLICATION

(11) **EP 4 797 082 A1**
(43) Date of publication of application: **26.08.2026**
(21) Application number: 25226186.2
(22) Date of filing: 22.12.2025
(51) Int. Cl.: G06F 9/30, G06F 9/345, G06F 9/38

(54) **APPARATUS AND METHOD FOR STRIDED VECTOR LOADS AND STORES WITH SCALAR PROGRESS TRACKING**

(30) Priority: 24.02.2025 US 202563762586 P; 28.06.2025 US 202519253805
(71) Applicant: INTEL Corporation, Santa Clara, CA 95054 (US)
(72) Inventor: Hughes, Christopher J., Santa Clara, 95051 (US); Orenstein, Doron, Haifa, 34982 (US); Yosef, Yuval, 38243 Hadera (IL); Markovich, Dror, 65231 Tel Aviv (IL); Heinecke, Alexander, San Jose, 95134 (US); Agron, Jason, San Jose, 95112 (US); Heirman, Wim, 9880 Aalter VOV (BE); Lingxiang, Xiang, Santa Clara, 95134 (US); Dahlin, Jan-Erik, 753 34 Uppsala (SE); De Pestel, Sander, 9820 Munte (BE)
(74) Representative: Goddar, Heinz J.

(57) **Abstract**

An apparatus and method for progress tracking strided vector loads and stores. For example, an example method comprises: decoding a progress tracking strided load instruction including fields to indicate a destination vector register in which to load source data elements, memory locations of the source data elements, and a register to store a progress indication; initiating execution of the progress tracking strided load instruction; loading one or more of the source data elements to corresponding locations in the destination vector register; updating the progress indication in accordance with the one or more source data elements loaded or a next source data element to be loaded; and in response to an interruption of the execution of the progress tracking strided load instruction, re-starting the execution of the instruction from an execution point based on the progress indication.

## Description

### BACKGROUND

### Field of the Invention

This invention relates generally to the field of computer processors. More particularly, the invention relates to an apparatus and method for strided vector loads and stores with scalar progress tracking.

### Description of the Related Art

In workloads that operate on multi-dimensional arrays, such as artificial intelligence (AI)/machine learning workloads operating on neural network weight matrices, multiple small pieces of data are often loaded, concatenated, and placed into the same vector register, e.g., for matrix multiplication operations. Typically, the pieces of data will either be contiguous, in which case one contiguous piece of memory is loaded, or the pieces are spaced evenly, e.g., along a column of a matrix. Reading such regularly spaced data is known as a strided load and writing such a pattern is known as a strided store.

### BRIEF DESCRIPTION OF THE DRAWINGS

A better understanding of the present invention can be obtained from the following detailed description in conjunction with the following drawings, in which:
FIG. 1 illustrates an example of an execution of a gather stride instruction.
FIG. 2 illustrates another example of an execution of a gather stride instruction.
FIG. 3 illustrates yet another example of an execution of a gather stride instruction.
FIG. 4 illustrates an embodiment of the use of a gather stride instruction in a processor.
FIG. 5 illustrates an embodiment of a method for processing a gather stride instruction.
FIG. 6 illustrates an example of an execution of a scatter stride instruction.
FIG. 7 illustrates another example of an execution of a scatter stride instruction.
FIG. 8 illustrates yet another example of an execution of a scatter stride instruction.
FIG. 9 illustrates an embodiment of the use of a scatter stride instruction in a processor.
FIG. 10 illustrates an embodiment of a method for processing a scatter stride instruction.
An example of an execution of a gather stride prefetch instruction is illustrated in FIG. 11.
FIG. 12 illustrates an embodiment of the use of a gather stride prefetch instruction in a processor.
FIG. 13 illustrates an embodiment of a method for processing a gather stride prefetch instruction.
FIG. 14A is a block diagram illustrating a generic vector friendly instruction format and class A instruction templates thereof according to embodiments of the invention.
FIG. 14B is a block diagram illustrating the generic vector friendly instruction format and class B instruction templates thereof according to embodiments of the invention.
FIGS. 15A-B illustrates an exemplary specific vector friendly instruction format according to embodiments of the invention.
FIG. 16 is a block diagram of a register architecture according to one embodiment of the invention.
FIG. 17A is a block diagram of a single CPU core, along with its connection to the on-die interconnect network and with its local subset of the level 2 (L2) cache, according to embodiments of the invention.
FIG. 17B is an exploded view of part of the CPU core in figure 17A according to embodiments of the invention.
FIG. 18 is a block diagram illustrating an exemplary out-of-order architecture according to embodiments of the invention.
FIG. 19 is a block diagram of a system in accordance with one embodiment of the invention.
FIG. 20 is a block diagram of a second system in accordance with an embodiment of the invention.
FIG. 21 is a block diagram of a third system in accordance with an embodiment of the invention.
FIG. 22 is a block diagram of a SoC in accordance with an embodiment of the invention.
FIG. 23 is a block diagram of a single core processor and a multicore processor with integrated memory controller and graphics according to embodiments of the invention.
FIG. 24 is a block diagram contrasting the use of a software instruction converter to convert binary instructions in a source instruction set to binary instructions in a target instruction set according to embodiments of the invention.
FIG. 25 illustrates a processor or core architecture in accordance with some implementations.
FIG. 26 illustrates a method for performing progress tracking for a strided load instruction.
FIG. 27 illustrates a method for performing progress tracking for a strided store instruction.

### DETAILED DESCRIPTION

**In** the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

**In** high performance computing/throughput computing applications, the most common non-contiguous memory reference pattern is a "strided memory pattern." A strided memory pattern is a sparse set of memory locations with every element separated from the previous one by the e19t same constant amount called a stride. This memory pattern is commonly found when accessing the diagonal or the columns of a multi-dimensional "C" or other high-level programming language array.

An example of strided pattern is: A, A+3, A+6, A+9, A+12, ... where A is the base address and the stride is 3. The problem of gathers and scatters dealing with strided memory patterns is that they are designed to assume a random distribution of elements and cannot take advantage of the intrinsic information that the stride provides (a higher level of predictability allows higher performance implementations). Moreover, programmers and compilers incur an overhead to transform a known stride into a vector of memory indexes that a gather/scatter can use as input. Below are embodiments of several gathering and scattering instructions that take advantage of a stride and embodiments of systems, architectures, instruction formats etc. that may be used to execute such an instruction.

### Gather Stride

The first of such instructions is a gather stride instruction. The execution of this instruction by a processor conditionally loads data elements from memory into a destination register. For example, in some embodiments up to sixteen 32-bit or eight 64-bit floating-point data elements are conditionally packed into a destination such as a XMM, YMM, or ZMM register.

The data elements to be loaded are specified via a type of SIB (scale, index, and base) addressing. In some embodiments, the instruction includes a base address passed in a general-purpose register, a scale passed as an immediate, a stride register passed as a general-purpose register, and an optional displacement. Of course other implementations may be used such as the instruction including immediate values of the base address and/or stride, etc.

The gather stride instruction also includes a writemask. In some embodiments that use a dedicated mask register such as a "k" writemask detailed later, the memory data elements will be loaded when their corresponding writemask bit indicates that they should be (for example, in some embodiments if the bit is a "1"). In other embodiments, the writemask bit for a data element is the sign bit of the corresponding element from the writemask register (e.g., an XMM or YMM register). In those embodiments, writemask elements are treated as the same size as data elements. If a data element's corresponding writemask bit is not set, the corresponding data element of the destination register (e.g., an XMM, YMM, or ZMM register) is left unchanged.

Typically, the execution of a gather stride instruction will result in the entire writemask register being set to zero unless there is an exception. However, in some embodiments the instruction is suspended by an exception if at least one element has already been gathered (i.e., if the exception is triggered by an element other than the least significant one with its writemask bit set). When this happens the destination register and the writemask register are partially updated (those elements that have been gathered are placed into the destination register and have their mask bits set to zero). If any traps or interrupts are pending from already gathered elements, they may be delivered in lieu of the exception and the EFLAGS resume flag or equivalent is set to one so an instruction breakpoint is not re-triggered when the instruction is continued.

In some embodiments with 128-bit size vectors, the instruction will gather up to four single-precision floating point values or two double-precision floating point values. In some embodiments with 256-bit size vectors the instruction will gather up to eight single-precision floating point values or four double-precision floating point values. In some embodiments with 512-bit size vectors, the instruction will gather up to sixteen single-precision floating point values or eight double-precision floating point values.

In some embodiments, if the mask and destination registers are the same, this instruction delivers a GP fault. Typically, the data element values may be read from memory in any order. However, faults are delivered in a right-to-left manner. That is, if a fault is triggered by an element and delivered, all elements closer to the LSB of the destination XMM, YMM, or ZMM will be completed (and non-faulting). Individual elements closer to the MSB may or may not be completed. If a given element triggers multiple faults, they are delivered in the conventional order. A given implementation of this instruction is repeatable - given the same input values and architectural state, the same set of elements to the left of the faulting one will be gathered.

An exemplary format of this instruction is *"VGATHERSTR* zmm1 {k1}, [base, scale * stride] + displacement," where zmm1 is a destination vector register operand (such as a 128-, 256-, 512-bit register, etc.), k1 is a writemask operand (such as a 16-bit register examples of which are detailed later), and base, scale, stride, and displacement are used to generate a memory source address for a first data element in memory and a stride value for subsequent memory data elements to be conditionally packed into the destination register. In some embodiments, the writemask is also of a different size (8 bits, 32 bits, etc.). Additionally, in some embodiments, not all bits of the writemask are utilized by the instruction as will be detailed below. VGATHERSTR is the instruction's opcode. Typically, each operand is explicitly defined in the instruction. The size of the data elements may be defined in the "prefix" of the instruction such as through the use of an indication of data granularity bit like "W" described herein. In most embodiments, a data granularity bit will indicate that data elements are either 32 or 64 bits. If the data elements are 32 bits in size, and the sources are 512 bits in size, then there are sixteen (16) data elements per source.

A quick detour on addressing that may be used for this instruction. In a regular Intel Architecture (x86) memory operand, one may have the following; for instance: [rax + rsi*2]+36, where RAX: is the BASE, RSI: is the INDEX, 2: is the scale SS, 36: is a displacement, and [ ] : brackets mean the content of a memory operand. Therefore, the data at this address is data = MEM_CONTENTS(addr= RAX + RSI*2 + 36). In a regular gather, you have the following for instance: [rax + zmm2*2]+36, where RAX: is the BASE, Zmm2: is the *vector* of INDEXes, 2: is the scale SS, 36: is a displacement, and [ ] : brackets mean the content of a memory operand. Therefore, a vector of data is: data[i] = MEM_CONTENTS(addr= RAX + ZMM2[i]*2 + 36). In a gather stride, in some embodiments, the addressing is again: [rax, rsi*2]+36 where RAX: is the BASE, RSI: is the STRIDE, 2: is the scale SS, 36: is a displacement, and [ ] : brackets mean the content of a memory operand. Here, the vector of data is data[i] = MEM_CONTENTS(addr= RAX + STRIDE*i*2 + 36). Other "stride" instructions may have similar addressing models.

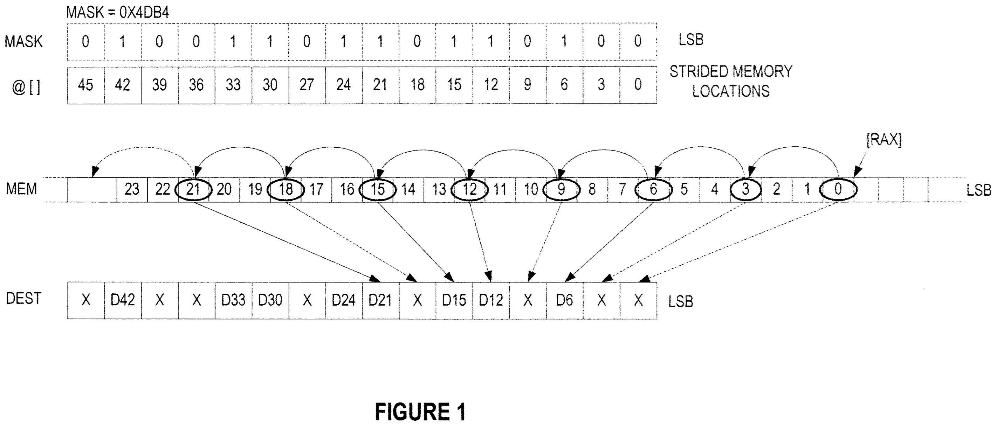

An example of an execution of a gather stride instruction is illustrated in Figure 1. In this example, the source is memory initially addressed at an address found in the RAX register (this is a simplistic view of memory addressing and displacement, etc. may be used to generate an address). Of course, the memory address may be stored in other registers or found as an immediate in the instruction as detailed above.

The writemask in this example is a 16-bit writemask with bit values corresponding to a hexadecimal value of 4DB4. For each bit position of the writemask with a "1" value, a data element from the memory source is stored in the destination register at the corresponding position. The first position of the writemask (e.g., k1[0]) is "0" which indicates that the corresponding destination data element position (e.g., the first data element of the destination register) will not have a data element from the source memory stored there. In this case, the data element associated with the RAX address would not be stored. The next bit of the writemask is also "0" and indicates that a subsequent "strided" data element from memory should also not be stored into the destination register. In this example, the stride value is "3" and thus this subsequent strided data element is the third data element away from the first data element.

The first "1" value in the writemask is in the third bit position (e.g., k1[2]). This indicates that the strided data element that is subsequent to the previous strided data element of the memory is to be stored into the corresponding data element position in the destination register. This subsequent strided data element is 3 away from the previous strided data element and 6 away from the first data element.

The remaining writemask bit positions are used to determine which additional data elements of the memory source are to be stored in the destination register (in this instance, eight total data elements are stored, but there could be fewer or more depending on the writemask bits). Additionally, data elements from the memory source may be upconverted to fit the data element size of the destination such as going from a 16-bit floating point value to a 32-bit floating point value prior to storage in the destination. Examples of upconversion and how to encode them into an instruction format have been detailed above. Additionally, in some embodiments, the strided data elements of the memory operand are stored in a register prior to storing in the destination.

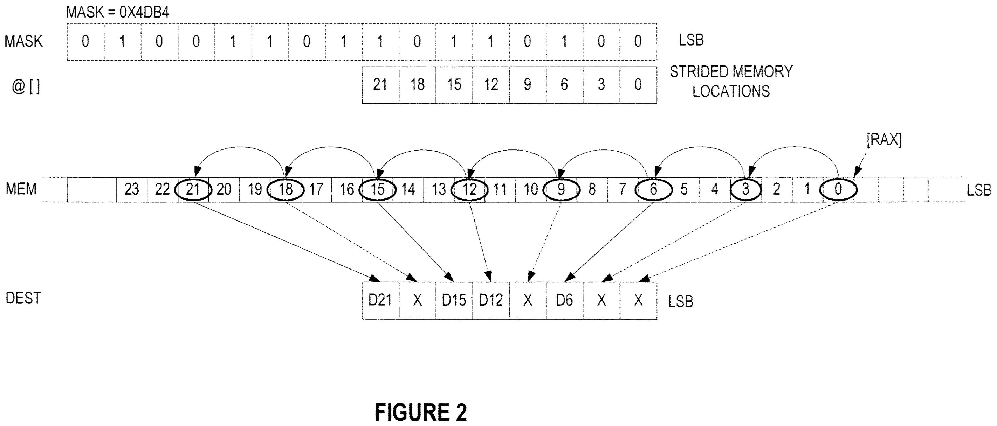

Another example of an execution of a gather stride instruction is illustrated in Figure 2. This example is similar to the previous one, but the size of the data elements is different (for example, data elements are 64-bit instead of 32-bit). Because of this size change, the number of bits used in the mask also changes (it is eight). In some embodiments, the lower eight bits of the masks are used (the eight least significant). In other embodiments, the upper eight bits of the masks are used (the eight most significant). In other embodiments, every other bit (i.e., the even bits or odd bits) of the masks is used.

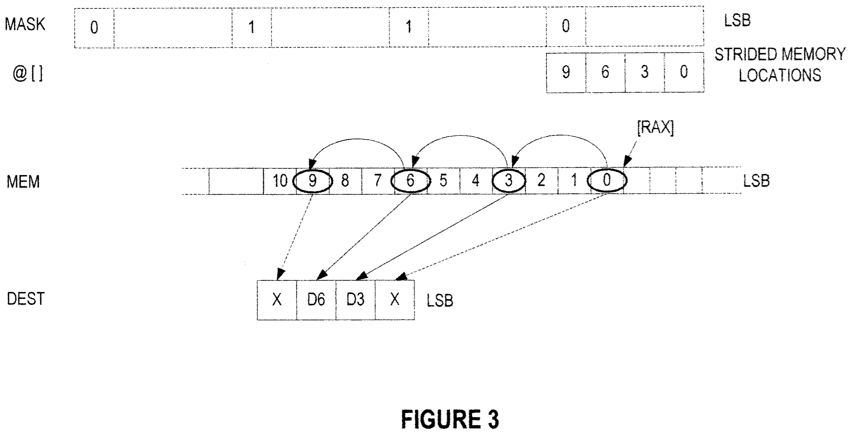

Yet another example of an execution of a gather stride instruction is illustrated in Figure 3. This example is similar to the previous ones, except that the mask is not a 16-bit register. Rather, the writemask register is a vector register (such as an XMM or YMM register). In this example, the writemask bit for each data element to be conditionally stored is the sign bit of the corresponding data element in the writemask.

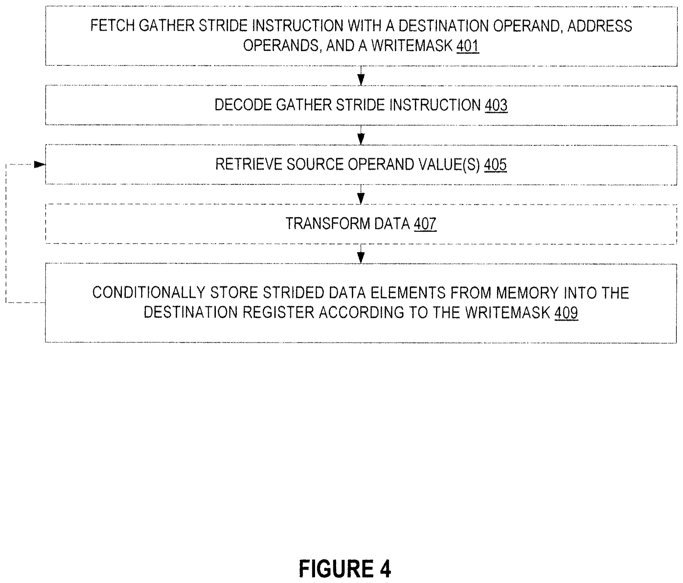

Figure 4 illustrates an embodiment of the use of a gather stride instruction in a processor. A gather stride instruction with a destination operand, source address operand(s) (base, displacement, index, and/or scale), and writemask is fetched at 401. Exemplary sizes of operands have been previously detailed.

The gather stride instruction is decoded at 403. Depending on the instruction's format, a variety of data may be interpreted at this stage such as if there is to be an upconversion (or other data transformation), which registers to write to and retrieve, what the source memory address is, etc.

The source operand value(s) are retrieved/read at 405. In most embodiments, the data elements associated with the memory source location address and subsequent strided addresses are read at this time (for example, an entire cache line is read). Additionally, they may be temporarily stored in a vector register other than the destination. However, data elements from the source may be retrieved one at a time.

If there is any data element transformation to be performed (such as an upconversion) it may be performed at 407. For example, a 16-bit data element from memory may be upconverted into a 32-bit data element.

The gather stride instruction (or operations comprising such an instruction such as microoperations) is executed by execution resources at 409. This execution causes strided data elements of the addressed memory to be conditionally stored into the destination register based on corresponding bits of the writemask. Examples of this storage have been illustrated previously.

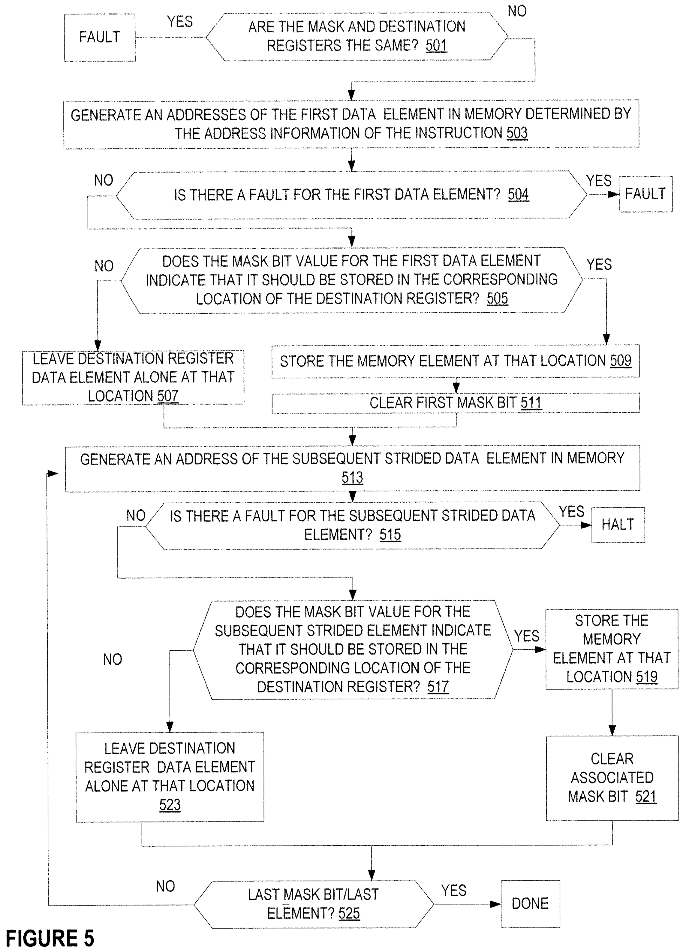

Figure 5 illustrates an embodiment of a method for processing a gather stride instruction. In this embodiment it is assumed that some, if not all, of the operations 401-407 have been performed previously, however, they are not shown in order to not obscure the details presented below. For example, the fetching and decoding are not shown, nor is the operand (sources and writemask) retrieval shown.

At 501, a determination of if the mask and destination are the same register is made. If they are, then a fault will be generated and execution of the instruction will halt.

If they are not the same, an address of the first data element in memory is generated from the address data of the source operands at 503. For example, the base and displacement are used to generate an address. Again, this could have been previously performed. The data element is retrieved at this time if it has not been. In some embodiments several if not all of the (strided) data elements are retrieved.

A determination of if there is a fault for the first data element may be made at 504. If there is a fault, then the instruction's execution is halted.

If there is not a fault, a determination of if the writemask bit value corresponding to the first data element in memory indicates that it should be stored in the corresponding location in the destination register is made at 505. Looking back at the previous examples, this determination looks at the least significant position of the writemask such as the least significant value of the writemask of Figure 1 to see if the memory data element should be stored in the first data element position of the destination.

When the writemask bit does not indicate that the memory data element should be stored in the destination register, then the data element in the first position of the destination is left alone at 507. Typically, this is indicated by a "0" value in the writemask, however, the opposite convention may be used.

When the writemask bit does indicate that the memory data element should be stored in the destination register, then the data element in the first position of the destination is stored in that location at 509. Typically, this is indicated by a "1" value in the writemask, however, the opposite convention may be used. If there needed to be any data transformation, such as an upconversion, it may be performed at this time too if it had not already been done.

The first writemask bit is cleared at 511 to indicate a successful writing.

The address of the subsequent strided data element to be conditionally stored into the destination register is generated at 513. As detailed in the previous examples, this data element is "x" data elements away from the previously data element of the memory where "x" is the stride value included with the instruction. Again, this could have been previously performed. The data element is retrieved at this time if it has not been previously performed.

A determination of if there is a fault for this subsequent strided data element may be made at 515. If there is a fault then the instruction's execution is halted.

If there was not a fault, then a determination of if the writemask bit value corresponding to the subsequent strided data element in memory indicates that it should be stored in the corresponding location in the destination register is made at 517. Looking back at the previous examples, this determination looks at the next position of the writemask such as the second least significant value of the writemask of Figure 1 to see if the memory data element should be stored in the second data element position of the destination.

When the writemask bit does not indicate that the memory data element should be stored in the destination register, then the data element in that position of the destination is left alone at 523. Typically, this is indicated by a "0" value in the writemask, however, the opposite convention may be used.

When the writemask bit does indicate that the memory data element should be stored in the destination register, then the data element in that position of the destination is stored in that location at 519. Typically, this is indicated by a "1" value in the writemask, however, the opposite convention may be used. If there needed to be any data transformation, such as an upconversion, it may be performed at this time too if it had not already been done.

The writemask evaluated bit is cleared at 521 to indicate a successful writing.

A determination of if the evaluated writemask position was the last of the writemask or if all of the data element positions of the destination have been filled is made at 525. If true, then the operation is over. If not true, then another writemask bit is evaluated, etc.

While this figure and above description considers the respective first positions to be the least significant positions, in some embodiments the first positions are the most significant positions. In some embodiments, fault determinations are not made.

### Scatter Stride

The second of such instructions is a scatter stride instruction. In some embodiments, the execution of this instruction by a processor causes data elements from a source register (e.g., XMM, YMM, or ZMM) to be conditionally stored to destination memory locations based on values in a writemask. For example, in some embodiments up to sixteen 32-bit or eight 64-bit floating-point data elements are conditionally stored into destination memory.

Typically, the destination memory locations are specified via SIB information (as explained above). Data elements are stored if their corresponding mask bit indicates that they should be. In some embodiments, the instruction includes a base address passed in a general-purpose register, a scale passed as an immediate, a stride register passed as a general-purpose register, and an optional displacement. Of course other implementations may be used such as the instruction including immediate values of the base address and/or stride, etc.

The scatter stride instruction also includes a writemask. In some embodiments that use dedicated mask registers such as a "k" writemask detailed later, the source data elements will be stored if their corresponding writemask bit indicates that they should be (for example, in some embodiments if the bit is a "1"). In other embodiments, the writemask bit for a data element is the sign bit of the corresponding element from the writemask register (e.g., an XMM or YMM register). In those embodiments, writemask elements are treated as the same size as data elements. If a data element's corresponding writemask bit is not set, the corresponding data element of the memory is left unchanged.

Typically, the entire writemask register associated with the scatter stride instruction will be set to zero by this instruction unless an exception is triggered. Additionally, the execution of this instruction may be suspended by an exception if at least one data element is already scattered (just as the gather stride instruction above). When this happens, the destination memory and the mask register are partially updated.

In some embodiments with 128-bit size vectors, the instruction will scatter up to four single-precision floating point values or two double-precision floating point values. In some embodiments with 256-bit size vectors the instruction will scatter up to eight single-precision floating point values or four double-precision floating point values. In some embodiments with 512-bit size the instruction will scatter up to sixteen 32-bit or eight 64-bit floating point values.

In some embodiments, only writes to overlapping destination locations are guaranteed to be ordered with respect to each other (from least to most significant of the source registers). If any two locations from two different elements are the same, the elements overlap. Writes that are not overlapped may happen in any order. In some embodiments, if two or more destination locations completely overlap, the "earlier" write(s) may be skipped. Additionally, in some embodiments, data elements may be scattered in any order (if there is no overlap), but faults are delivered in a right-to-left order, just as with the gather stride instruction above.

An exemplary format of this instruction is *"VSCATTERSTR* [base, scale * stride] + displacement {k1}, ZMM1, " where ZMM1 is a source vector register operand (such as a 128-, 256-, 512-bit register, etc.), k1 is a writemask operand (such as a 16-bit register examples of which are detailed later), and base, scale, stride, and displacement provide a memory destination address and a stride value to subsequent data elements of the memory to be conditionally packed into the destination register. In some embodiments, the writemask is also of a different size (8 bits, 32 bits, etc.). Additionally, in some embodiments, not all bits of the writemask are utilized by the instruction as will be detailed below. VSCATTERSTR is the instruction's opcode. Typically, each operand is explicitly defined in the instruction. The size of the data elements may be defined in the "prefix" of the instruction such as through the use of an indication of data granularity bit like "W" described herein. In most embodiments, the data granularity bit will indicate that data elements are either 32 or 64 bits. If the data elements are 32 bits in size, and the sources are 512 bits in size, then there are sixteen (16) data elements per source.

This instruction is normally writemasked so that only those elements with the corresponding bit set in a writemask register, k1 in the example above, are modified in the destination memory locations. Data elements in the destination memory locations with the corresponding bit clear in the writemask register retain their previous values.

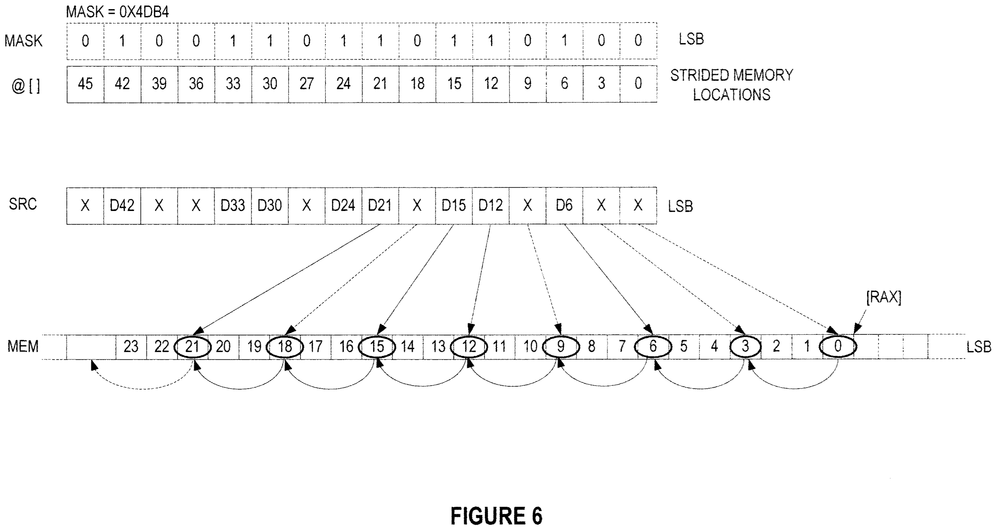

An example of an execution of a scatter stride instruction is illustrated in Figure 6. The source is a register such as XMM, YMM, or ZMM. In this example, the destination is memory initially addressed at an address found in the RAX register (this is a simplistic view of memory addressing and displacement, etc. may be used to generate an address). Of course, the memory address may be stored in other registers or found as an immediate in the instruction as detailed above.

The writemask in this example is a 16-bit writemask with bit values corresponding to a hexadecimal value of 4DB4. For each bit position of the writemask with a "1" value, a corresponding data element from the register source is stored in the destination memory at a corresponding (strided) position. The first position of the writemask (e.g., k1 [0]) is "0" which indicates that the corresponding source data element position (e.g., the first data element of the source register) will not be written to the RAX memory location. The next bit of the writemask is also "0" and indicates that the next data element from the source register will not be stored into a memory location that is strided from the RAX memory location. In this example, the stride value is "3" and thus the data element that is three data elements from the RAX memory location will not be overwritten.

The first "1" value in the writemask is in the third bit position (e.g., k1[2]). This indicates that the third data element of the source register is to be stored in the destination memory. This data element is stored in a location that is 3 strides away from the strided data element and 6 away from the first data element.

The remaining writemask bit positions are used to determine which additional data elements of the source register are to be stored in the destination memory (in this instance, eight total data elements are stored, but there could be fewer or more depending on the writemask). Additionally, the data elements from the register source may be downconverted to fit the data element size of the destination such as going from a 32-bit floating point value to a 16-bit floating point value prior to storage in the destination. Examples of downconversion and how to encode them into an instruction format have been detailed above.

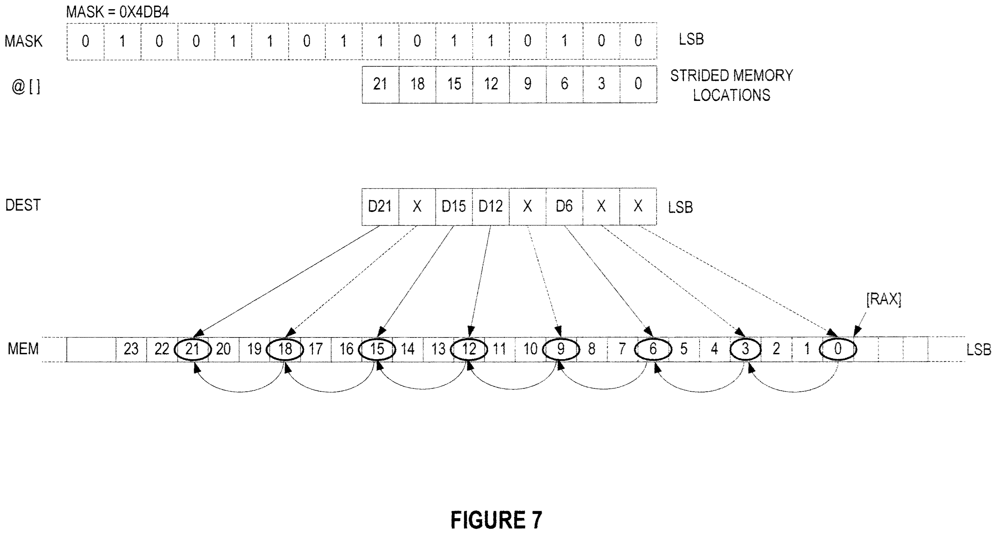

Another example of an execution of a scatter stride instruction is illustrated in Figure 7. This example is similar to the previous one, but the size of the data elements is different (for example, data elements are 64-bit instead of 32-bit). Because of this size change, the number of bits used in the mask also changes (it is eight). In some embodiments, the lower eight bits of the masks are used (the eight least significant). In other embodiments, the upper eight bits of the masks are used (the eight most significant). In other embodiments, every other bit (i.e., the even bits or odd bits) of the masks is used.

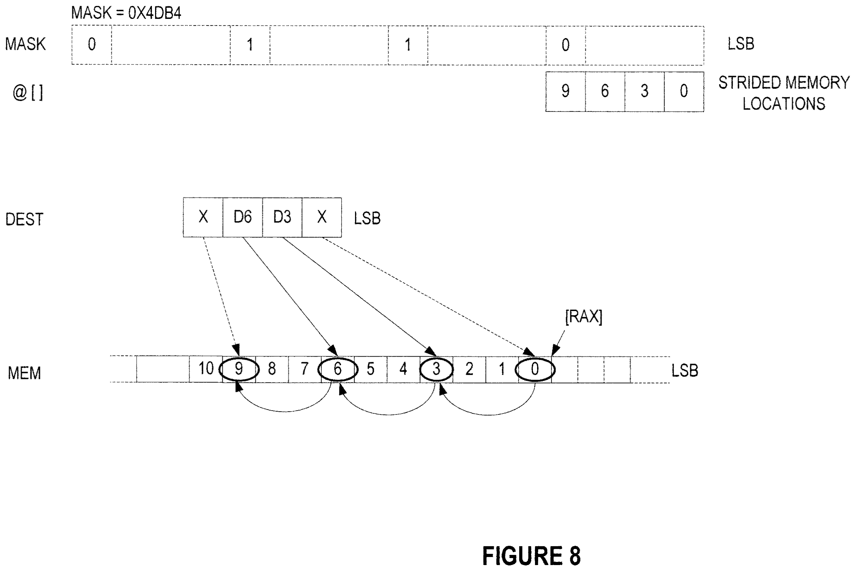

Yet another example of an execution of a scatter stride instruction is illustrated in Figure 8. This example is similar to the previous ones, except that the mask is not a 16-bit register. Rather, the writemask register is a vector register (such as an XMM or YMM register). In this example, the writemask bit for each data element to be conditionally stored is the sign bit of the corresponding data element in the writemask.

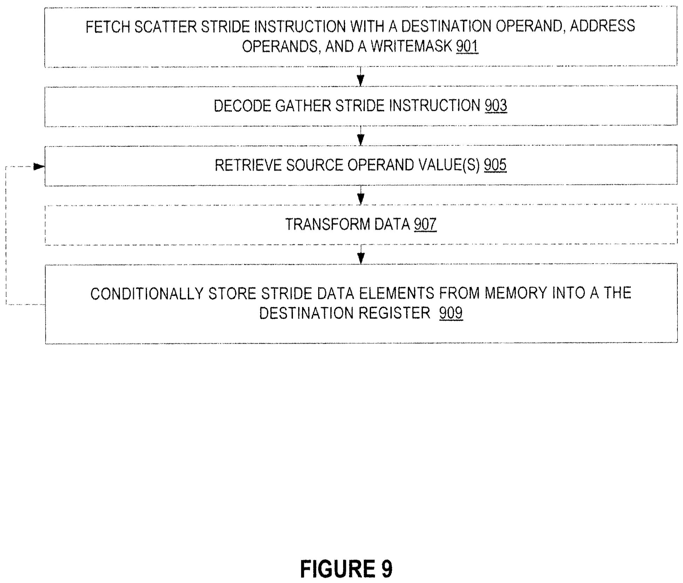

Figure 9 illustrates an embodiment of the use of a scatter stride instruction in a processor. A scatter stride instruction with destination address operands (base, displacement, index, and/or scale), a writemask, and a source register operand is fetched at 901. Exemplary sizes of source registers have been previously detailed.

The scatter stride instruction is decoded at 903. Depending on the instruction's format, a variety of data may be interpreted at this stage such as if there is to be a downconversion (or other data transformation), which registers to write to and retrieve, what the memory address is, etc.

The source operand value(s) are retrieved/read at 905.

If there is any data element transformation to be performed (such as a downconversion) it may be performed at 907. For example, a 32-bit data element from the source may be downconverted into a 16-bit data element.

The scatter stride instruction (or operations comprising such an instruction such as microoperations) is executed by execution resources at 909. This execution causes data elements from the source (e.g., XMM, YMM, or ZMM register) to be conditionally stored to any overlapping (strided) destination memory locations from least to most significant based on values in the writemask.

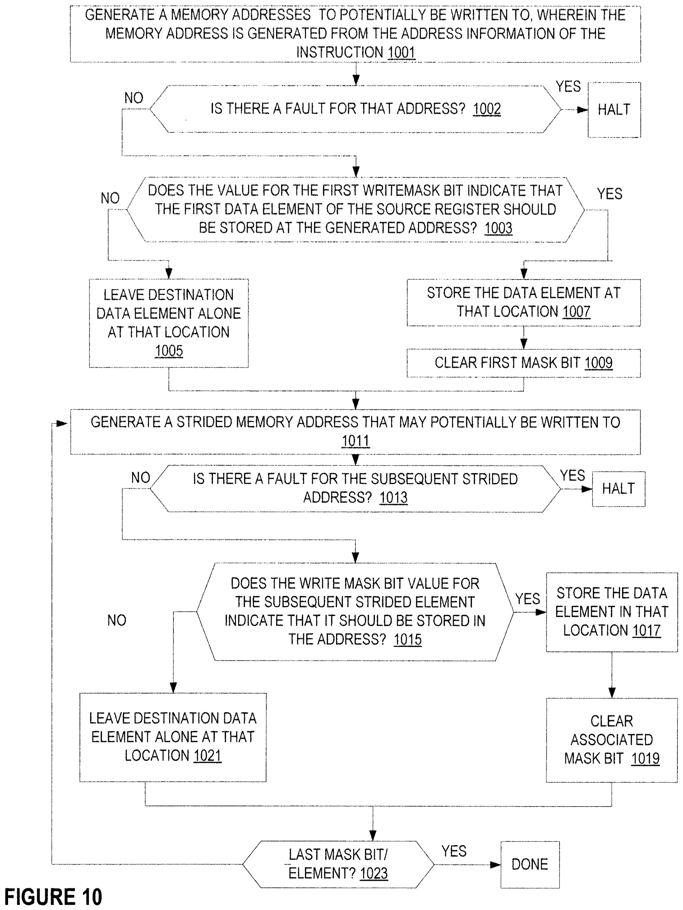

Figure 10 illustrates an embodiment of a method for processing a scatter stride instruction. In this embodiment, it is assumed that some, if not all, of the operations 901-907 have been performed previously, however, they are not shown in order to not obscure the details presented below. For example, the fetching and decoding are not shown, nor is the operand (sources and writemask) retrieval shown.

An address of the first memory location that could potentially be written to is generated from the address data of the instruction at 1001. Again, this could have been previously performed.

A determination of if there is a fault for that address is made at 1002. If there is a fault then execution halts.

If there is no fault, a determination of if the value for the first writemask bit indicates that the first data element of the source register should be stored at the generated address is made at 1003. Looking back at the previous examples, this determination looks at the least significant position of the writemask such as the least significant value of the writemask of Figure 6 to see if the first register data element should be stored at the generated address.

When the writemask bit does not indicate that the register data element should be stored at the generated address, then the data element in the memory at that address is left alone at 1005. Typically, this is indicated by a "0" value in the writemask, however, the opposite convention may be used.

When the writemask bit does indicate that the register data element should be stored at the generated address, then the data element in the first position of the source is stored in that location at 1007. Typically, this is indicated by a "1" value in the writemask, however, the opposite convention may be used. If there needed to be any data transformation, such as a downconversion, it may be performed at this time too if it had not already been done so.

The writemask bit is cleared at 1009 to indicate a successful writing.

A subsequent strided memory address that may have its data element conditionally overwritten is generated at 1011. As detailed in the previous examples, this address is "x" data elements away from the previously data element of the memory where "x" is the stride value included with the instruction.

A determination of if there is a fault for this subsequent strided data element address may be made at 1013. If there is a fault then the instruction's execution is halted.

If there was not a fault, then a determination of if the value for the subsequent writemask bit indicates that the subsequent data element of the source register should be stored at the generated stride address is made at 1015. Looking back at the previous examples, this determination looks at the next position of the writemask such as the second least significant value of the writemask of Figure 6 to see if the corresponding data element should be stored at the generated address.

When the writemask bit does not indicate that the source data element should be stored at the memory location, then the data element at that address is left alone at 1021. Typically, this is indicated by a "0" value in the writemask, however, the opposite convention may be used.

When the writemask bit does indicate that the source's data element should be stored at the generated stride address, then the data element at that address is overwritten with the source data element at 1017. Typically, this is indicated by a "1" value in the writemask, however, the opposite convention may be used. If there needed to be any data transformation, such as a downconversion, it may be performed at this time too if it had not already been done.

The writemask bit is cleared at 1019 to indicate a successful writing.

A determination of if the evaluated writemask position was the last of the writemask or if all of the data element positions of the destination have been filled is made at 1023. If true, then the operation is over. If not true, then another data element is evaluated for storing at a strided address, etc.

While this figure and above description considers the respective first positions to be the least significant positions, in some embodiments the first positions are the most significant positions. Additionally, in some embodiments, fault determinations are not made.

### Gather Stride Prefetch

The third of such instructions is a gather stride prefetch instruction. The execution of this instruction by a processor conditionally prefetches strided data elements from memory (system or cache) into a level of cache hinted at by the instruction according to the instruction's writemask. The data that is prefetched may be read by a subsequent instruction. Unlike the gather stride instruction discussed above, there is no destination register and the writemask is not modified (this instruction does not modify any architectural state of the processor). The data elements may be prefetched as parts of entire memory chunks such as a cache line.

The data elements to be prefetched are specified via a type of SIB (scale, index, and base) as was discussed above. In some embodiments, the instruction includes a base address passed in a general-purpose register, a scale passed as an immediate, a stride register passed as a general-purpose register, and an optional displacement. Of course other implementations may be used such as the instruction including immediate values of the base address and/or stride, etc.

The gather stride prefetch instruction also includes a writemask. In some embodiments that use a dedicated mask register such as a "k" writemask detailed herein , the memory data elements will be prefetched if their corresponding writemask bit indicates that they should be (for example, in some embodiments if the bit is a "1"). In other embodiments, the writemask bit for a data element is the sign bit of the corresponding element from the writemask register (e.g., an XMM or YMM register). In those embodiments, writemask elements are treated as the same size as data elements.

Additionally, unlike embodiments of the gather stride discussed above, the gather stride prefetch instruction is typically not suspended on exceptions and does not deliver page faults.

An exemplary format of this instruction is *"VGATHERSTR_PRE* [base, scale * stride] + displacement, {k1}, hint" where k1 is a writemask operand (such as a 16-bit register examples of which are detailed later), and base, scale, stride, and displacement provide a memory source address and a stride value to subsequent data elements of the memory to be conditionally prefetched. The hint provides the cache level to conditionally prefetch to. In some embodiments, the writemask is also of a different size (8 bits, 32 bits, etc.). Additionally, in some embodiments, not all bits of the writemask are utilized by the instruction as will be detailed below. VGATHERSTR_PRE is the instruction's opcode. Typically, each operand is explicitly defined in the instruction.

This instruction is normally writemasked so that only those memory locations with the corresponding bit set in a writemask register, k1 in the example above, are prefetched.

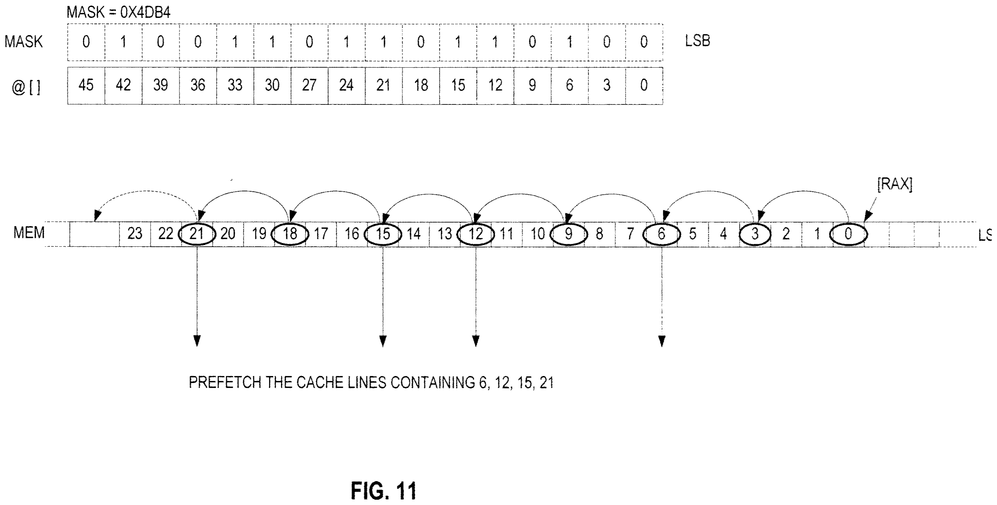

An example of an execution of a gather stride prefetch instruction is illustrated in Figure 11. In this example, the memory is initially addressed at an address found in the RAX register (this is a simplistic view of memory addressing and displacement, etc. may be used to generate an address). Of course, the memory address may be stored in other registers or found as an immediate in the instruction as detailed above.

The writemask in this example is a 16-bit writemask with bit values corresponding to a hexadecimal value of 4DB4. For each bit position of the writemask with a "1" value, a data element from the memory source is to be prefetched which may include prefetching the entire line of cache or memory. The first position of the writemask (e.g., k1[0]) is "0" which indicates that the corresponding destination data element position (e.g., the first data element of the destination register) will not be prefetched. In this case, the data element associated with the RAX address would not prefetched. The next bit of the writemask is also "0" and indicates that a subsequent "strided" data element from memory should also not be prefetched. In this example, the stride value is "3" and thus this subsequent data element is the third data element away from the first data element.

The first "1" value in the writemask is in the third bit position (e.g., k1[2]). This indicates that the strided data element that is subsequent to previous strided data element of the memory is to be prefetched. This subsequent strided data element is 3 away from the previous strided data element and 6 away from the first data element.

The remaining writemask bit positions are used to determine which additional data elements of the memory source are to be prefetched.

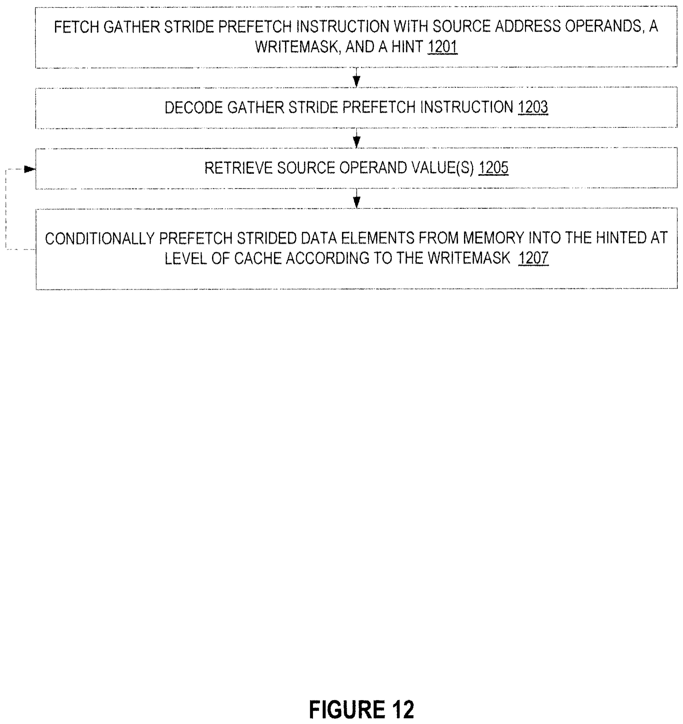

Figure 12 illustrates an embodiment of the use of a gather stride prefetch instruction in a processor. A gather stride prefetch instruction with address operands (base, displacement, index, and/or scale), a writemask, and hint is fetched at 1201.

The gather stride prefetch instruction is decoded at 1203. Depending on the instruction's format, a variety of data may be interpreted at this stage such which cache level to prefetch for, what the memory address is from the source, etc.

The source operand value(s) are retrieved/read at 1205. In most embodiments, the data elements associated with the memory source location address and subsequent strided addresses (and their data elements) are read at this time (for example, an entire cache line is read). However, data elements from the source may be retrieved one at a time as shown by the dashed line.

The gather stride prefetch instruction (or operations comprising such an instruction such as microoperations) is executed by execution resources at 1207. This execution causes the processor to conditionally prefetch strided data elements from memory (system or cache) into a level of cache hinted at by the instruction according to the instruction's writemask.

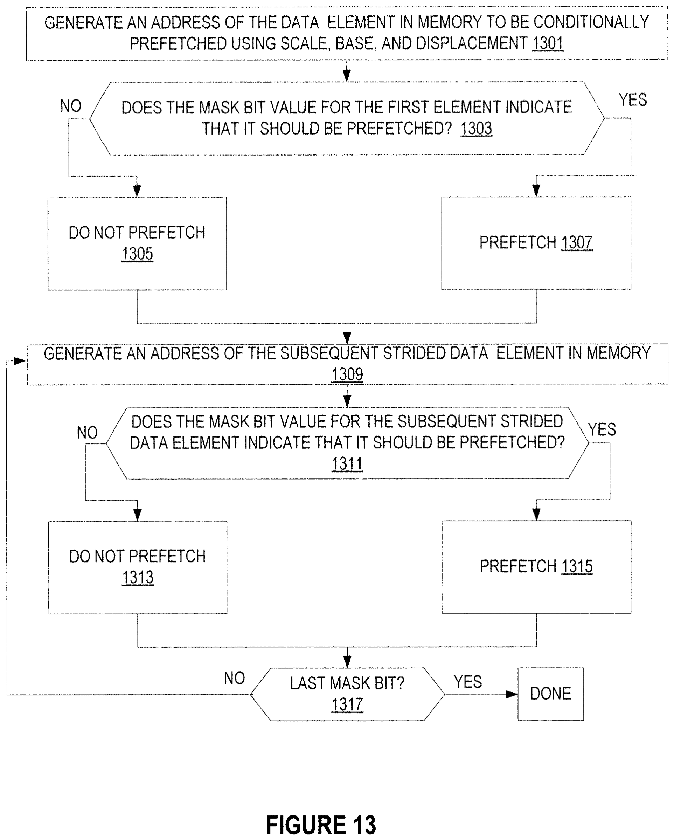

Figure 13 illustrates an embodiment of a method for processing a gather stride prefetch instruction. In this embodiment it is assumed that some, if not all, of the operations 1201-1205 have been previously performed, however, they are not shown in order to not obscure the details presented below.

An address of the first data element in memory to be conditionally prefetched is generated from the address data of the source operands at 1301. Again, this could have been previously performed.

A determination of if the writemask bit value corresponding to the first data element in memory indicates that it should be prefetched is made at 1303. Looking back at the previous examples, this determination looks at the least significant position of the writemask such as the least significant value of the writemask of Figure 11 to see if the memory data element should be prefetched.

When the writemask does not indicate that the memory data element should be prefetched, then nothing is prefetched at 1305. Typically, this is indicated by a "0" value in the writemask, however, the opposite convention may be used.

When the writemask does indicate that the memory data element should be prefetched, then the data element is prefetched at 1307. Typically, this is indicated by a "1" value in the writemask, however, the opposite convention may be used. As detailed earlier, this could mean that an entire cache line or memory location is fetched including other data elements.

The address of the subsequent strided data element to be conditionally prefetched is generated at 1309. As detailed in the previous examples, this data element is "x" data elements away from the previously data element of the memory where "x" is the stride value included with the instruction.

A determination of if the writemask bit value corresponding to the subsequent strided data element in memory indicates that it should prefetched is made at 1311. Looking back at the previous examples, this determination looks at the next position of the writemask such as the second least significant value of the writemask of Figure 11 to see if the memory data element should be prefetched.

When the writemask does not indicate that the memory data element should be prefetched, then nothing is prefetched at 1313. Typically, this is indicated by a "0" value in the writemask, however, the opposite convention may be used.

When the writemask does indicate that the memory data element should be prefetched, then the data element in that position of the destination is prefetched at 1315. Typically, this is indicated by a "1" value in the writemask, however, the opposite convention may be used.

A determination of if the evaluated writemask position was the last of the writemask is made at 1317. If true, then the operation is over. If not true, then another strided data element is evaluated, etc.

While this figure and above description considers the respective first positions to be the least significant positions, in some embodiments the first positions are the most significant positions.

### Scatter Stride Prefetch

The fourth of such instructions is a scatter stride prefetch instruction. The execution of this instruction by a processor conditionally prefetches strided data elements from memory (system or cache) into a level of cache hinted at by the instruction according to the instructions writemask. The difference between this instruction and gather stride prefetch is that the data prefetched will be subsequently written and not read.

Embodiments of the instruction(s) detailed above are embodied may be embodied in a "generic vector friendly instruction format" which is detailed below. In other embodiments, such a format is not utilized and another instruction format is used, however, the description below of the writemask registers, various data transformations (swizzle, broadcast, etc.), addressing, etc. is generally applicable to the description of the embodiments of the instruction(s) above. Additionally, exemplary systems, architectures, and pipelines are detailed below. Embodiments of the instruction(s) above may be executed on such systems, architectures, and pipelines, but are not limited to those detailed.

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

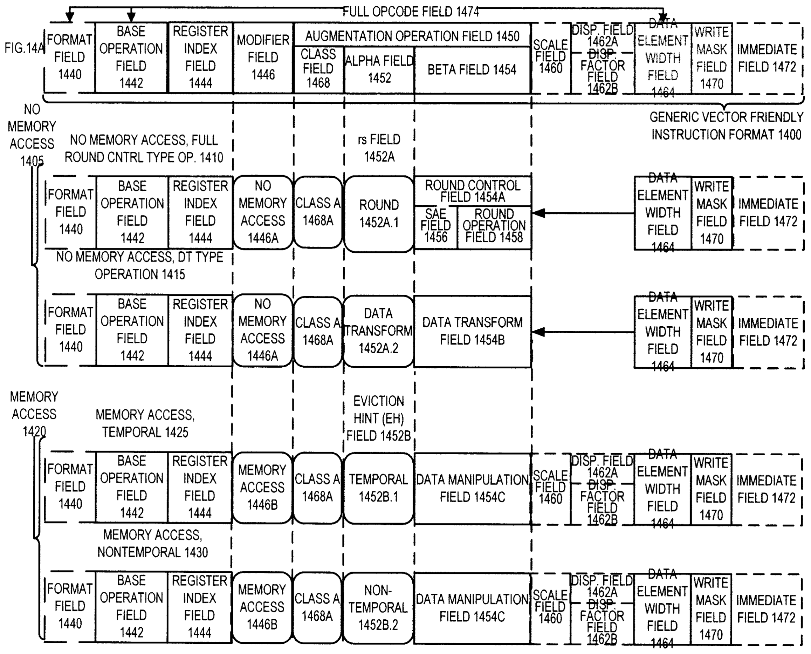

### Exemplary Generic Vector Friendly Instruction Format - Figure 14A-B

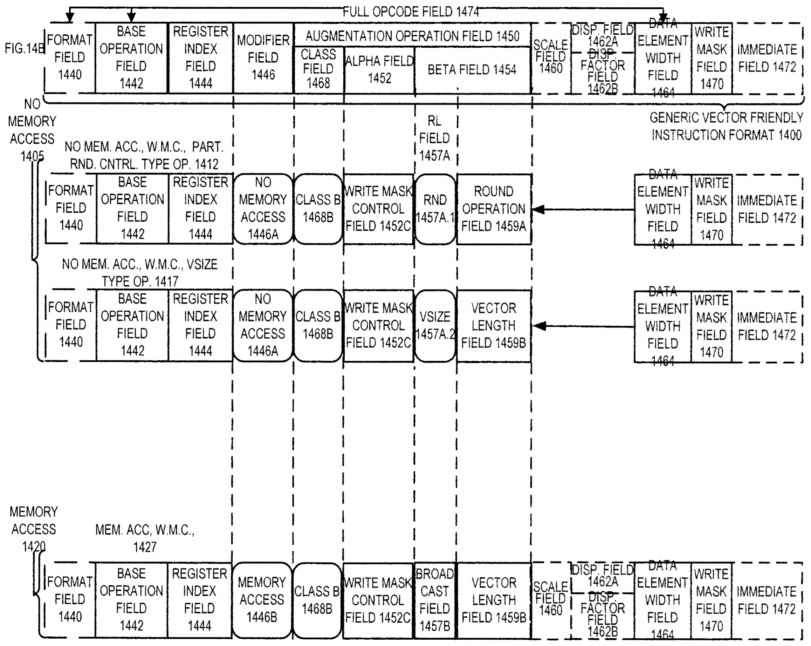

Figures 14A-B are block diagrams illustrating a generic vector friendly instruction format and instruction templates thereof according to embodiments of the invention. Figure 14A is a block diagram illustrating a generic vector friendly instruction format and class A instruction templates thereof according to embodiments of the invention; while Figure 14B is a block diagram illustrating the generic vector friendly instruction format and class B instruction templates thereof according to embodiments of the invention. Specifically, a generic vector friendly instruction format 1400 for which are defined class A and class B instruction templates, both of which include no memory access 1405 instruction templates and memory access 1420 instruction templates. The term generic in the context of the vector friendly instruction format refers to the instruction format not being tied to any specific instruction set. While embodiments will be described in which instructions in the vector friendly instruction format operate on vectors that are sourced from either registers (no memory access 1405 instruction templates) or registers/memory (memory access 1420 instruction templates), alternative embodiments of the invention may support only one of these. Also, while embodiments of the invention will be described in which there are load and store instructions in the vector instruction format, alternative embodiments instead or additionally have instructions in a different instruction format that move vectors into and out of registers (e.g., from memory into registers, from registers into memory, between registers). Further, while embodiments of the invention will be described that support two classes of instruction templates, alternative embodiments may support only one of these or more than two.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 1456 byte vector operands) with more, less, or different data element widths (e.g., 128 bit (16 byte) data element widths).

The class A instruction templates in Figure 14A include: 1) within the no memory access 1405 instruction templates there is shown a no memory access, full round control type operation 1410 instruction template and a no memory access, data transform type operation 1415 instruction template; and 2) within the memory access 1420 instruction templates there is shown a memory access, temporal 1425 instruction template and a memory access, non-temporal 1430 instruction template. The class B instruction templates in Figure 14B include: 1) within the no memory access 1405 instruction templates there is shown a no memory access, write mask control, partial round control type operation 1412 instruction template and a no memory access, write mask control, vsize type operation 1417 instruction template; and 2) within the memory access 1420 instruction templates there is shown a memory access, write mask control 1427 instruction template.

### Format

The generic vector friendly instruction format 1400 includes the following fields listed below in the order illustrated in Figures 14A-B.

Format field 1440 - a specific value (an instruction format identifier value) in this field uniquely identifies the vector friendly instruction format, and thus occurrences of instructions in the vector friendly instruction format in instruction streams. Thus, the content of the format field 1440 distinguish occurrences of instructions in the first instruction format from occurrences of instructions in other instruction formats, thereby allowing for the introduction of the vector friendly instruction format into an instruction set that has other instruction formats. As such, this field is optional in the sense that it is not needed for an instruction set that has only the generic vector friendly instruction format.

Base operation field 1442 - its content distinguishes different base operations. As described later herein, the base operation field 1442 may include and/or be part of an opcode field.

Register index field 1444 - its content, directly or through address generation, specifies the locations of the source and destination operands, be they in registers or in memory. These include a sufficient number of bits to select N registers from a PxQ (e.g. 32x1612) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination). While in one embodiment P=32, alternative embodiments may support more or less registers (e.g., 16). While in one embodiment Q=1612 bits, alternative embodiments may support more or less bits (e.g., 128, 1024).

Modifier field 1446 - its content distinguishes occurrences of instructions in the generic vector instruction format that specify memory access from those that do not; that is, between no memory access 1405 instruction templates and memory access 1420 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1450 - its content distinguishes which one of a variety of different operations to be performed in addition to the base operation. This field is context specific. In one embodiment of the invention, this field is divided into a class field 1468, an alpha field 1452, and a beta field 1454. The augmentation operation field allows common groups of operations to be performed in a single instruction rather than 2, 3 or 4 instructions. Below are some examples of instructions (the nomenclature of which are described in more detail later herein) that use the augmentation field 1450 to reduce the number of required instructions.

| Prior Instruction Sequences | Instructions Sequences according to on Embodiment of the Invention |
|---|---|
| vaddps ymm0, ymm1, ymm2 | vaddps zmm0, zmm1, zmm2 |
| vpshufd ymm2, ymm2, 0x55 | vaddps zmm0, zmm1, zmm2 {bbbb} |
| vaddps ymm0, ymm1, ymm2 | |
| vpmovsxbd ymm2, [rax] | vaddps zmm0, zmm1, [rax]{sint8} |
| vcvtdq2ps ymm2, ymm2 | |
| vaddps ymm0, ymm1, ymm2 | |
| vpmovsxbd ymm3, [rax] | vaddps zmm1{k5}, zmm2, [rax]{sint8} |
| vcvtdq2ps ymm3, ymm3 | |
| vaddps ymm4, ymm2, ymm3 | |
| vblendvps ymm1, ymm5, ymm1, ymm4 | |
| vmaskmovps ymm1, ymm7, [rbx] | vmovaps zmm1 {k7}, [rbx] |
| vbroadcastss ymm0, [rax] | vaddps zmm2{k7}{z}, zmm1, [rax]{1 toN} |
| vaddps ymm2, ymm0, ymm1 | |
| vblendvps ymm2, ymm2, ymm1, ymm7 | |

Where [rax] is the base pointer to be used for address generation, and where {} indicates a conversion operation specified by the data manipulation filed (described in more detail later here).

Scale field 1460 - its content allows for the scaling of the index field's content for memory address generation (e.g., for address generation that uses 2^{scale}*index +base).

Displacement Field 1462A- its content is used as part of memory address generation (e.g., for address generation that uses 2^{scale}*index+base+displacement).

Displacement Factor Field 1462B (note that the juxtaposition of displacement field 1462A directly over displacement factor field 1462B indicates one or the other is used) - its content is used as part of address generation; it specifies a displacement factor that is to be scaled by the size of a memory access (N) - where N is the number of bytes in the memory access (e.g., for address generation that uses 2^{scale}*index+base+scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1474 (described later herein) and the data manipulation field 1454C as described later herein. The displacement field 1462A and the displacement factor field 1462B are optional in the sense that they are not used for the no memory access 1405 instruction templates and/or different embodiments may implement only one or none of the two.

Data element width field 1464 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1470 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1470 allows for partial vector operations, including loads, stores, arithmetic, logical, etc. Also, this masking can be used for fault suppression (i.e., by masking the destination's data element positions to prevent receipt of the result of any operation that may/will cause a fault - e.g., assume that a vector in memory crosses a page boundary and that the first page but not the second page would cause a page fault, the page fault can be ignored if all data element of the vector that lie on the first page are masked by the write mask). Further, write masks allow for "vectorizing loops" that contain certain types of conditional statements. While embodiments of the invention are described in which the write mask field's 1470 content selects one of a number of write mask registers that contains the write mask to be used (and thus the write mask field's 1470 content indirectly identifies that masking to be performed), alternative embodiments instead or additional allow the mask write field's 1470 content to directly specify the masking to be performed. Further, zeroing allows for performance improvements when: 1) register renaming is used on instructions whose destination operand is not also a source (also call non-ternary instructions) because during the register renaming pipeline stage the destination is no longer an implicit source (no data elements from the current destination register need be copied to the renamed destination register or somehow carried along with the operation because any data element that is not the result of operation (any masked data element) will be zeroed); and 2) during the write back stage because zeros are being written.

Immediate field 1472 - its content allows for the specification of an immediate. This field is optional in the sense that is it not present in an implementation of the generic vector friendly format that does not support immediate and it is not present in instructions that do not use an immediate.

### Instruction Template Class Selection

Class field 1468 - its content distinguishes between different classes of instructions. With reference to figures 2A-B, the contents of this field select between class A and class B instructions. In Figures 14A-B, rounded corner squares are used to indicate a specific value is present in a field (e.g., class A 1468A and class B 1468B for the class field 1468 respectively in Figures 14A-B).

### No-Memory Access Instruction Templates of Class A

In the case of the non-memory access 1405 instruction templates of class A, the alpha field 1452 is interpreted as an RS field 1452A, whose content distinguishes which one of the different augmentation operation types are to be performed (e.g., round 1452A.1 and data transform 1452A.2 are respectively specified for the no memory access, round type operation 1410 and the no memory access, data transform type operation 1415 instruction templates), while the beta field 1454 distinguishes which of the operations of the specified type is to be performed. In Figure 14, rounded corner blocks are used to indicate a specific value is present (e.g., no memory access 1446A in the modifier field 1446; round 1452A.1 and data transform 1452A.2 for alpha field 1452/rs field 1452A). In the no memory access 1405 instruction templates, the scale field 1460, the displacement field 1462A, and the displacement scale filed 1462B are not present.

### No-Memory Access Instruction Templates - Full Round Control Type Operation

In the no memory access full round control type operation 1410 instruction template, the beta field 1454 is interpreted as a round control field 1454A, whose content(s) provide static rounding. While in the described embodiments of the invention the round control field 1454A includes a suppress all floating point exceptions (SAE) field 1456 and a round operation control field 1458, alternative embodiments may support may encode both these concepts into the same field or only have one or the other of these concepts/fields (e.g., may have only the round operation control field 1458).

SAE field 1456 - its content distinguishes whether or not to disable the exception event reporting; when the SAE field's 1456 content indicates suppression is enabled, a given instruction does not report any kind of floating-point exception flag and does not raise any floating point exception handler.

Round operation control field 1458 - its content distinguishes which one of a group of rounding operations to perform (e.g., Round-up, Round-down, Round-towards-zero and Round-to-nearest). Thus, the round operation control field 1458 allows for the changing of the rounding mode on a per instruction basis, and thus is particularly useful when this is required. In one embodiment of the invention where a processor includes a control register for specifying rounding modes, the round operation control field's 1450 content overrides that register value (Being able to choose the rounding mode without having to perform a save-modify-restore on such a control register is advantageous).

### No Memory Access Instruction Templates - Data Transform Type Operation

In the no memory access data transform type operation 1415 instruction template, the beta field 1454 is interpreted as a data transform field 1454B, whose content distinguishes which one of a number of data transforms is to be performed (e.g., no data transform, swizzle, broadcast).

### Memory Access Instruction Templates of Class A

In the case of a memory access 1420 instruction template of class A, the alpha field 1452 is interpreted as an eviction hint field 1452B, whose content distinguishes which one of the eviction hints is to be used (in Figure 14A, temporal 1452B.1 and non-temporal 1452B.2 are respectively specified for the memory access, temporal 1425 instruction template and the memory access, non-temporal 1430 instruction template), while the beta field 1454 is interpreted as a data manipulation field 1454C, whose content distinguishes which one of a number of data manipulation operations (also known as primitives) is to be performed (e.g., no manipulation; broadcast; up conversion of a source; and down conversion of a destination). The memory access 1420 instruction templates include the scale field 1460, and optionally the displacement field 1462A or the displacement scale field 1462B.

Vector Memory Instructions perform vector loads from and vector stores to memory, with conversion support. As with regular vector instructions, vector memory instructions transfer data from/to memory in a data element-wise fashion, with the elements that are actually transferred dictated by the contents of the vector mask that is selected as the write mask. In Figure 14A, rounded corner squares are used to indicate a specific value is present in a field (e.g., memory access 1446B for the modifier field 1446; temporal 1452B.1 and non-temporal 1452B.2 for the alpha field 1452/eviction hint field 1452B)

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 1452 is interpreted as a write mask control (Z) field 1452C, whose content distinguishes whether the write masking controlled by the write mask field 1470 should be a merging or a zeroing.

### No-Memory Access Instruction Templates of Class B

In the case of the non-memory access 1405 instruction templates of class B, part of the beta field 1454 is interpreted as an RL field 1457A, whose content distinguishes which one of the different augmentation operation types are to be performed (e.g., round 1457A.1 and vector length (VSIZE) 1457A.2 are respectively specified for the no memory access, write mask control, partial round control type operation 1412 instruction template and the no memory access, write mask control, VSIZE type operation 1417 instruction template), while the rest of the beta field 1454 distinguishes which of the operations of the specified type is to be performed. In Figure 14, rounded corner blocks are used to indicate a specific value is present (e.g., no memory access 1446A in the modifier field 1446; round 1457A.1 and VSIZE 1457A.2 for the RL field 1457A). In the no memory access 1405 instruction templates, the scale field 1460, the displacement field 1462A, and the displacement scale filed 1462B are not present.

### No-Memory Access Instruction Templates - Write Mask Control, Partial Round Control Type Operation

In the no memory access, write mask control, partial round control type operation 1410 instruction template, the rest of the beta field 1454 is interpreted as a round operation field 1459A and exception event reporting is disabled (a given instruction does not report any kind of floating-point exception flag and does not raise any floating point exception handler).

Round operation control field 1459A - just as round operation control field 1458, its content distinguishes which one of a group of rounding operations to perform (e.g., Round-up, Round-down, Round-towards-zero and Round-to-nearest). Thus, the round operation control field 1459A allows for the changing of the rounding mode on a per instruction basis, and thus is particularly useful when this is required. In one embodiment of the invention where a processor includes a control register for specifying rounding modes, the round operation control field's 1450 content overrides that register value (Being able to choose the rounding mode without having to perform a save-modify-restore on such a control register is advantageous).

### No Memory Access Instruction Templates - Write Mask Control, VSIZE Type Operation

In the no memory access, write mask control, VSIZE type operation 1417 instruction template, the rest of the beta field 1454 is interpreted as a vector length field 1459B, whose content distinguishes which one of a number of data vector length is to be performed on (e.g., 128, 1456, or 1612 byte).

### Memory Access Instruction Templates of Class B

In the case of a memory access 1420 instruction template of class A, part of the beta field 1454 is interpreted as a broadcast field 1457B, whose content distinguishes whether or not the broadcast type data manipulation operation is to be performed, while the rest of the beta field 1454 is interpreted the vector length field 1459B. The memory access 1420 instruction templates include the scale field 1460, and optionally the displacement field 1462A or the displacement scale field 1462B.

### Additional Comments Regarding Fields

With regard to the generic vector friendly instruction format 1400, a full opcode field 1474 is shown including the format field 1440, the base operation field 1442, and the data element width field 1464. While one embodiment is shown where the full opcode field 1474 includes all of these fields, the full opcode field 1474 includes less than all of these fields in embodiments that do not support all of them. The full opcode field 1474 provides the operation code.

The augmentation operation field 1450, the data element width field 1464, and the write mask field 1470 allow these features to be specified on a per instruction basis in the generic vector friendly instruction format.

The combination of write mask field and data element width field create typed instructions in that they allow the mask to be applied based on different data element widths.

The instruction format requires a relatively small number of bits because it reuses different fields for different purposes based on the contents of other fields. For instance, one perspective is that the modifier field's content choses between the no memory access 1405 instructions templates on Figures 14A-B and the memory access 14250 instruction templates on Figures 14A-B; while the class field 1468's content choses within those non-memory access 1405 instruction templates between instruction templates 1410/1415 of Figure 14A and 1412/1417 of Figure 14B; and while the class field 1468's content choses within those memory access 1420 instruction templates between instruction templates 1425/1430 of Figure 14A and 1427 of Figure 14B. From another perspective, the class field 1468's content choses between the class A and class B instruction templates respectively of Figures 14A and B; while the modifier field's content choses within those class A instruction templates between instruction templates 1405 and 1420 of Figure 14A; and while the modifier field's content choses within those class B instruction templates between instruction templates 1405 and 1420 of Figure 14B. In the case of the class field's content indicating a class A instruction template, the content of the modifier field 1446 choses the interpretation of the alpha field 1452 (between the rs field 1452A and the EH field 1452B. In a related manner, the contents of the modifier field 1446 and the class field 1468 chose whether the alpha field is interpreted as the rs field 1452A, the EH field 1452B, or the write mask control (Z) field 1452C. In the case of the class and modifier fields indicating a class A no memory access operation, the interpretation of the augmentation field's beta field changes based on the rs field's content; while in the case of the class and modifier fields indicating a class B no memory access operation, the interpretation of the beta field depends on the contents of the RL field. In the case of the class and modifier fields indicating a class A memory access operation, the interpretation of the augmentation field's beta field changes based on the base operation field's content; while in the case of the class and modifier fields indicating a class B memory access operation, the interpretation of the augmentation field's beta field's broadcast field 1457B changes based on the base operation field's contents. Thus, the combination of the base operation field, modifier field and the augmentation operation field allow for an even wider variety of augmentation operations to be specified.

The various instruction templates found within class A and class B are beneficial in different situations. Class A is useful when zeroing-writemasking or smaller vector lengths are desired for performance reasons. For example, zeroing allows avoiding fake dependences when renaming is used since we no longer need to artificially merge with the destination; as another example, vector length control eases store-load forwarding issues when emulating shorter vector sizes with the vector mask. Class B is useful when it is desirable to: 1) allow floating point exceptions (i.e., when the contents of the SAE field indicate no) while using rounding-mode controls at the same time; 2) be able to use upconversion, swizzling, swap, and/or downconversion; 3) operate on the graphics data type. For instance, upconversion, swizzling, swap, downconversion, and the graphics data type reduce the number of instructions required when working with sources in a different format; as another example, the ability to allow exceptions provides full IEEE compliance with directed rounding-modes.

### Exemplary Specific Vector Friendly Instruction Format

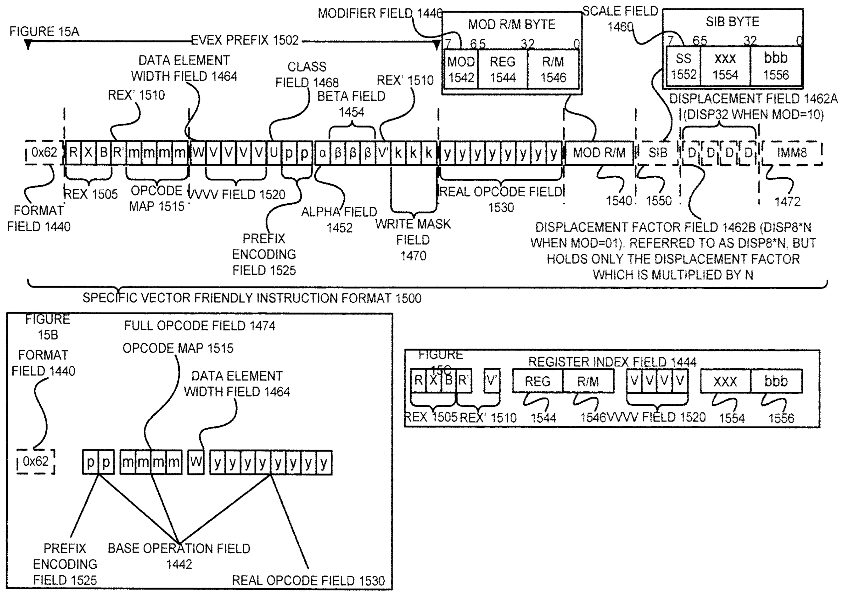

Figure 15 is a block diagram illustrating an exemplary specific vector friendly instruction format according to embodiments of the invention. Figure 15 shows a specific vector friendly instruction format 1500 that is specific in the sense that it specifies the location, size, interpretation, and order of the fields, as well as values for some of those fields. The specific vector friendly instruction format 1500 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from Figure 14 into which the fields from Figure 15 map are illustrated.

**It** should be understood that although embodiments of the invention are described with reference to the specific vector friendly instruction format 1500 in the context of the generic vector friendly instruction format 1400 for illustrative purposes, the invention is not limited to the specific vector friendly instruction format 1500 except where claimed. For example, the generic vector friendly instruction format 1400 contemplates a variety of possible sizes for the various fields, while the specific vector friendly instruction format 1500 is shown as having fields of specific sizes. By way of specific example, while the data element width field 1464 is illustrated as a one bit field in the specific vector friendly instruction format 1500, the invention is not so limited (that is, the generic vector friendly instruction format 1400 contemplates other sizes of the data element width field 1464).

### Format - Figure 15

The generic vector friendly instruction format 1400 includes the following fields listed below in the order illustrated in Figure 15.
EVEX Prefix (Bytes 0-3)
EVEX Prefix 1502 - is encoded in a four-byte form.

Format Field 1440 (EVEX Byte 0, bits [7:0]) - the first byte (EVEX Byte 0) is the format field 1440 and it contains 0x62 (the unique value used for distinguishing the vector friendly instruction format in one embodiment of the invention).

The second-fourth bytes (EVEX Bytes 1-3) include a number of bit fields providing specific capability.

REX field 1505 (EVEX Byte 1, bits [7-5]) - consists of a EVEX.R bit field (EVEX Byte 1, bit [7] - R), EVEX.X bit field (EVEX byte 1, bit [6] - X), and 1457BEX byte 1, bit[5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1510 - this is the first part of the REX' field 1510 and is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1515 (EVEX byte 1, bits [3:0] - mmmm) - its content encodes an implied leading opcode byte (0F, OF 38, or OF 3).

Data element width field 1464 (EVEX byte 2, bit [7] - W) - is represented by the notation EVEX.W. EVEX.W is used to define the granularity (size) of the datatype (either 32-bit data elements or 64-bit data elements).

EVEX.vvvv 1520 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 1520 encodes the 4 low-order bits of the first source register specifier stored in inverted (1s complement) form. Depending on the instruction, an extra different EVEX bit field is used to extend the specifier size to 32 registers.

EVEX.U 1468 Class field (EVEX byte 2, bit [2]-U) - If EVEX.U = 0, it indicates class A or EVEX.U0; if EVEX.U = 1, it indicates class B or EVEX.U1.

Prefix encoding field 1525 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1452 (EVEX byte 3, bit [7] - EH; also known as EVEX.EH, EVEX.rs, EVEX.RL, EVEX.write mask control, and EVEX.N; also illustrated with α) - as previously described, this field is context specific. Additional description is provided later herein.

Beta field 1454 (EVEX byte 3, bits [6:4]-SSS, also known as EVEX.s₂₋₀, EVEX.r₂₋₀, EVEX.rr1, EVEX.LL0, EVEX.LLB; also illustrated with βββ) - as previously described, this field is context specific. Additional description is provided later herein.

REX' field 1510 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 1470 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

### Real Opcode Field 1530 (Byte 4)

This is also known as the opcode byte. Part of the opcode is specified in this field.

### MOD R/M Field 1540 (Byte 5)

Modifier field 1446 (MODR/M.MOD, bits [7-6] - MOD field 1542) - As previously described, the MOD field's 1542 content distinguishes between memory access and non-memory access operations. This field will be further described later herein.

MODR/M.reg field 1544, bits [5-3] - the role of ModR/M.reg field can be summarized to two situations: ModR/M.reg encodes either the destination register operand or a source register operand, or ModR/M.reg is treated as an opcode extension and not used to encode any instruction operand.

MODR/M.r/m field 1546, bits [2-0] - The role of ModR/M.r/m field may include the following: ModR/M.r/m encodes the instruction operand that references a memory address, or ModR/M.r/m encodes either the destination register operand or a source register operand.

### Scale, Index, Base (SIB) Byte (Byte 6)

Scale field 1460 (SIB.SS, bits [7-6] - As previously described, the scale field's 1460 content is used for memory address generation. This field will be further described later herein.

SIB.xxx 1554 (bits [5-3] and SIB.bbb 1556 (bits [2-0]) - the contents of these fields have been previously referred to with regard to the register indexes Xxxx and Bbbb.

### Displacement Byte(s) (Byte 7 or Bytes 7-10)

Displacement field 1462A (Bytes 7-10) - when MOD field 1542 contains 10, bytes 7-10 are the displacement field 1462A, and it works the same as the legacy 32-bit displacement (disp32) and works at byte granularity.

Displacement factor field 1462B (Byte 7) - when MOD field 1542 contains 01, byte 7 is the displacement factor field 1462B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1462B is a reinterpretation of disp8; when using displacement factor field 1462B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1462B substitutes the legacy x86 instruction set 8-bit displacement. Thus, the displacement factor field 1462B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset).

### Immediate field 1472 operates as previously described.

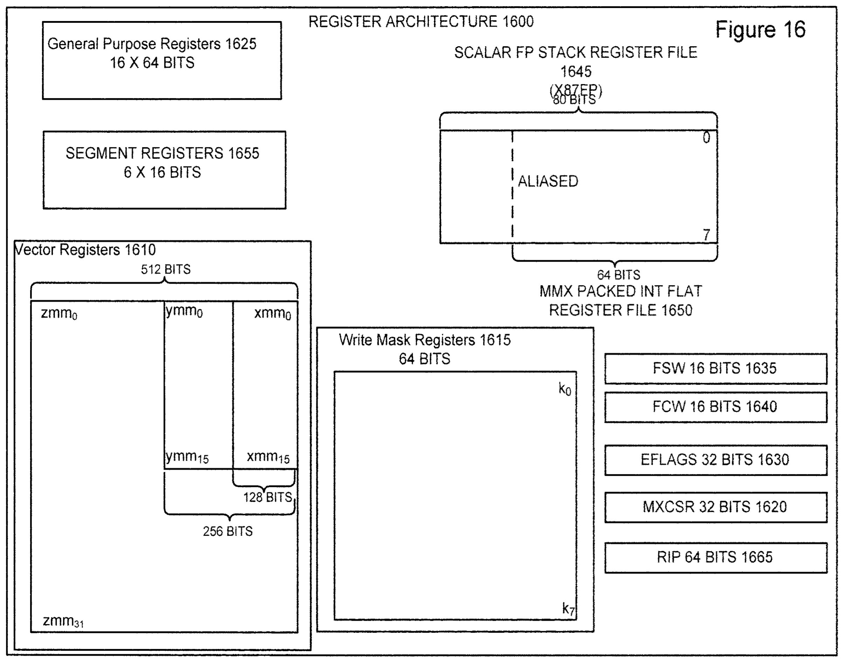

### Exemplary Register Architecture - Figure 16

Figure 16 is a block diagram of a register architecture 1600 according to one embodiment of the invention. The register files and registers of the register architecture are listed below:

Vector register file 1610 - in the embodiment illustrated, there are 32 vector registers that are 1612 bits wide; these registers are referenced as zmm0 through zmm31. The lower order 1456 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1500 operates on these overlaid register file as illustrated in the below tables.

| Adjustable Vector Length | Class | Operations | Registers |
|---|---|---|---|
| Instruction Templates that do not include the vector length field 1459B | A (Figure 14A; U=0) | 1410, 1415, 1425, 1430 | zmm registers (the vector length is 64 byte) |
| | B (Figure 14B; U=1) | 1412 | zmm registers (the vector length is 64 byte) |
| Instruction Templates that do include the vector length field 1459B | B (Figure 14B; U=1) | 1417, 1427 | zmm, ymm, or xmm registers (the vector length is 64 byte, 32 byte, or 16 byte) depending on the vector length field 1459B |

In other words, the vector length field 1459B selects between a maximum length and one or more other shorter lengths, where each such shorter length is half the length of the preceding length; and instructions templates without the vector length field 1459B operate on the maximum vector length. Further, in one embodiment, the class B instruction templates of the specific vector friendly instruction format 1500 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1615 - in the embodiment illustrated, there are 8 write mask registers (k0 through k7), each 64 bits in size. As previously described, in one embodiment of the invention the vector mask register k0 cannot be used as a write mask; when the encoding that would normally indicate k0 is used for a write mask, it selects a hardwired write mask of 0xFFFF, effectively disabling write masking for that instruction.

Multimedia Extensions Control Status Register (MXCSR) 1620 - in the embodiment illustrated, this 32-bit register provides status and control bits used in floating-point operations.

General-purpose registers 1625 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Extended flags (EFLAGS) register 1630 - in the embodiment illustrated, this 32 bit register is used to record the results of many instructions.

Floating Point Control Word (FCW) register 1635 and Floating Point Status Word (FSW) register 1640 - in the embodiment illustrated, these registers are used by x87 instruction set extensions to set rounding modes, exception masks and flags in the case of the FCW, and to keep track of exceptions in the case of the FSW.

Scalar floating point stack register file (x87 stack) 1645 on which is aliased the MMX packed integer flat register file 1650 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Segment registers 1655 - in the illustrated embodiment, there are six 16 bit registers use to store data used for segmented address generation.

RIP register 1665 - in the illustrated embodiment, this 64 bit register that stores the instruction pointer.

Alternative embodiments of the invention may use wider or narrower registers. Additionally, alternative embodiments of the invention may use more, less, or different register files and registers.

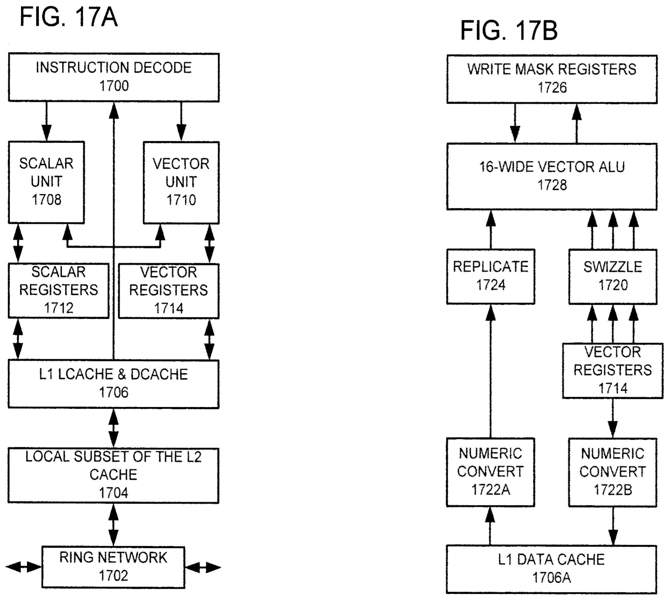

### Exemplary In-Order Processor Architecture - Figures 17A-17B

Figures 17A-B illustrate a block diagram of an exemplary in-order processor architecture. These exemplary embodiments are designed around multiple instantiations of an in-order CPU core that is augmented with a wide vector processor (VPU). Cores communicate through a high-bandwidth interconnect network with some fixed function logic, memory I/O interfaces, and other necessary I/O logic, depending on the e19t application. For example, an implementation of this embodiment as a stand-alone GPU would typically include a PCIe bus.

Figure 17A is a block diagram of a single CPU core, along with its connection to the on-die interconnect network 1702 and with its local subset of the level 2 (L2) cache 1704, according to embodiments of the invention. An instruction decoder 1700 supports the x86 instruction set with an extension including the specific vector instruction format 1500. While in one embodiment of the invention (to simplify the design) a scalar unit 1708 and a vector unit 1710 use separate register sets (respectively, scalar registers 1712 and vector registers 1714) and data transferred between them is written to memory and then read back in from a level 1 (L1) cache 1706, alternative embodiments of the invention may use a different approach (e.g., use a single register set or include a communication path that allow data to be transferred between the two register files without being written and read back).

The L1 cache 1706 allows low-latency accesses to cache memory into the scalar and vector units. Together with load-op instructions in the vector friendly instruction format, this means that the L1 cache 1706 can be treated somewhat like an extended register file. This significantly improves the performance of many algorithms, especially with the eviction hint field 1452B.

The local subset of the L2 cache 1704 is part of a global L2 cache that is divided into separate local subsets, one per CPU core. Each CPU has a direct access path to its own local subset of the L2 cache 1704. Data read by a CPU core is stored in its L2 cache subset 1704 and can be accessed quickly, in parallel with other CPUs accessing their own local L2 cache subsets. Data written by a CPU core is stored in its own L2 cache subset 1704 and is flushed from other subsets, if necessary. The ring network ensures coherency for shared data.

Figure 17B is an exploded view of part of the CPU core in figure 17A according to embodiments of the invention. Figure 17B includes an L1 data cache 1706A part of the L1 cache 1704, as well as more detail regarding the vector unit 1710 and the vector registers 1714. Specifically, the vector unit 1710 is a 16-wide vector processing unit (VPU) (see the 16-wide ALU 1728), which executes integer, single-precision float, and double-precision float instructions. The VPU supports swizzling the register inputs with swizzle unit 1720, numeric conversion with numeric convert units 1722A-B, and replication with replication unit 1724 on the memory input. Write mask registers 1726 allow predicating the resulting vector writes.

Register data can be swizzled in a variety of ways, e.g. to support matrix multiplication. Data from memory can be replicated across the VPU lanes. This is a common operation in both graphics and non-graphics parallel data processing, which significantly increases the cache efficiency.

The ring network is bi-directional to allow agents such as CPU cores, L2 caches and other logic blocks to communicate with each other within the chip. Each ring data-path is 1612-bits wide per direction.

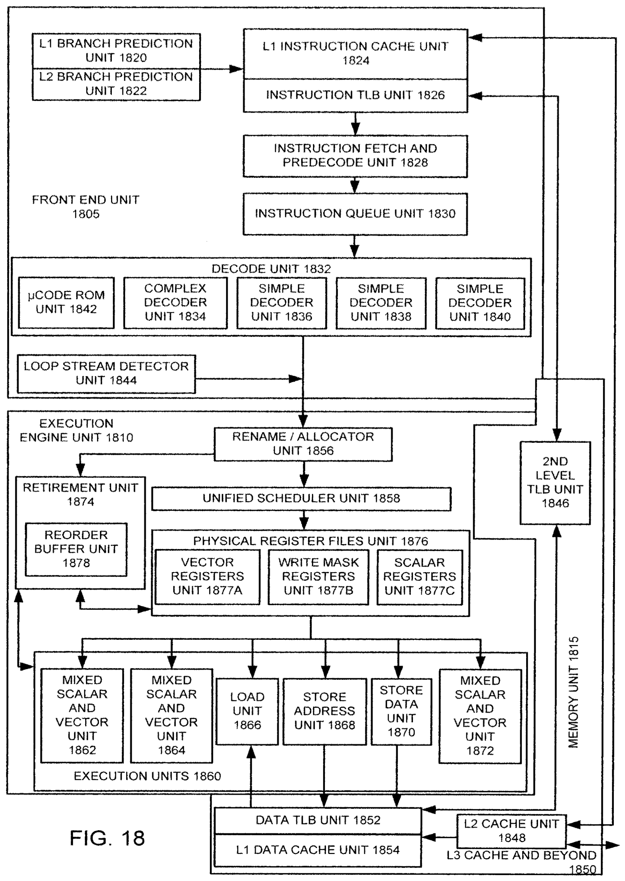

### Exemplary Out-of-order Architecture - Figure 18

Figure 18 is a block diagram illustrating an exemplary out-of-order architecture according to embodiments of the invention. Specifically, Figure 18 illustrates a well-known exemplary out-of-order architecture that has been modified to incorporate the vector friendly instruction format and execution thereof. In Figure 18 arrows denotes a coupling between two or more units and the direction of the arrow indicates a direction of data flow between those units. Figure 18 includes a front end unit 1805 coupled to an execution engine unit 1810 and a memory unit 1815; the execution engine unit 1810 is further coupled to the memory unit 1815.

The front end unit 1805 includes a level 1 (L1) branch prediction unit 1820 coupled to a level 2 (L2) branch prediction unit 1822. The L1 and L2 brand prediction units 1820 and 1822 are coupled to an L1 instruction cache unit 1824. The L1 instruction cache unit 1824 is coupled to an instruction translation lookaside buffer (TLB) 1826 which is further coupled to an instruction fetch and predecode unit 1828. The instruction fetch and predecode unit 1828 is coupled to an instruction queue unit 1830 which is further coupled a decode unit 1832. The decode unit 1832 comprises a complex decoder unit 1834 and three simple decoder units 1836, 1838, and 1840. The decode unit 1832 includes a microcode ROM unit 1842. The decode unit 1832 may operate as previously described above in the decode stage section. The L1 instruction cache unit 1824 is further coupled to an L2 cache unit 1848 in the memory unit 1815. The instruction TLB unit 1826 is further coupled to a second level TLB unit 1846 in the memory unit 1815. The decode unit 1832, the microcode ROM unit 1842, and a loop stream detector unit 1844 are each coupled to a rename/allocator unit 1856 in the execution engine unit 1810.

The execution engine unit 1810 includes the rename/allocator unit 1856 that is coupled to a retirement unit 1874 and a unified scheduler unit 1858. The retirement unit 1874 is further coupled to execution units 1860 and includes a reorder buffer unit 1878. The unified scheduler unit 1858 is further coupled to a physical register files unit 1876 which is coupled to the execution units 1860. The physical register files unit 1876 comprises a vector registers unit 1877A, a write mask registers unit 1877B, and a scalar registers unit 1877C; these register units may provide the vector registers 1610, the vector mask registers 1615, and the general purpose registers 1625; and the physical register files unit 1876 may include additional register files not shown (e.g., the scalar floating point stack register file 1645 aliased on the MMX packed integer flat register file 1650). The execution units 1860 include three mixed scalar and vector units 1862, 1864, and 1872; a load unit 1866; a store address unit 1868; a store data unit 1870. The load unit 1866, the store address unit 1868, and the store data unit 1870 are each coupled further to a data TLB unit 1852 in the memory unit 1815.

The memory unit 1815 includes the second level TLB unit 1846 which is coupled to the data TLB unit 1852. The data TLB unit 1852 is coupled to an L1 data cache unit 1854. The L1 data cache unit 1854 is further coupled to an L2 cache unit 1848. In some embodiments, the L2 cache unit 1848 is further coupled to L3 and higher cache units 1850 inside and/or outside of the memory unit 1815.

By way of example, the exemplary out-of-order architecture may implement a process pipeline as follows: 1) the instruction fetch and predecode unit 1828 perform the fetch and length decoding stages; 2) the decode unit 1832 performs the decode stage; 3) the rename/allocator unit 1856 performs the allocation stage and renaming stage; 4) the unified scheduler 1858 performs the schedule stage; 5) the physical register files unit 1876, the reorder buffer unit 1878, and the memory unit 1815 perform the register read/memory read stage; the execution units 1860 perform the execute/data transform stage; 6) the memory unit 1815 and the reorder buffer unit 1878 perform the write back/memory write stage 1960; 7) the retirement unit 1874 performs the ROB read stage; 8) various units may be involved in the exception handling stage; and 9) the retirement unit 1874 and the physical register files unit 1876 perform the commit stage.

### Exemplary Single Core and Multicore Processors

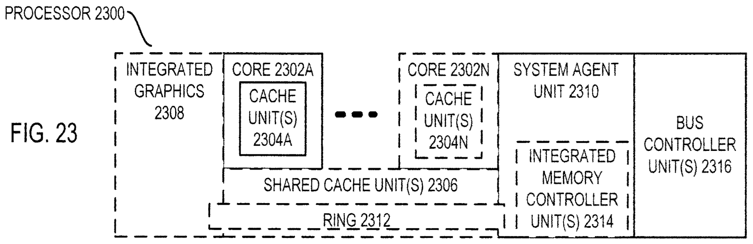

Figure 23 is a block diagram of a single core processor and a multicore processor 2300 with integrated memory controller and graphics according to embodiments of the invention. The solid lined boxes in Figure 23 illustrate a processor 2300 with a single core 2302A, a system agent 2310, a set of one or more bus controller units 2316, while the optional addition of the dashed lined boxes illustrates an alternative processor 2300 with multiple cores 2302A-N, a set of one or more integrated memory controller unit(s) 2314 in the system agent unit 2310, and an integrated graphics logic 2308.

The memory hierarchy includes one or more levels of cache within the cores, a set or one or more shared cache units 2306, and external memory (not shown) coupled to the set of integrated memory controller units 2314. The set of shared cache units 2306 may include one or more mid-level caches, such as level 2 (L2), level 3 (L3), level 4 (L4), or other levels of cache, a last level cache (LLC), and/or combinations thereof. While in one embodiment a ring based interconnect unit 2312 interconnects the integrated graphics logic 2308, the set of shared cache units 2306, and the system agent unit 2310, alternative embodiments may use any number of well-known techniques for interconnecting such units.

In some embodiments, one or more of the cores 2302A-N are capable of multi-threading. The system agent 2310 includes those components coordinating and operating cores 2302A-N. The system agent unit 2310 may include for example a power control unit (PCU) and a display unit. The PCU may be or include logic and components needed for regulating the power state of the cores 2302A-N and the integrated graphics logic 2308. The display unit is for driving one or more externally connected displays.

The cores 2302A-N may be homogenous or heterogeneous in terms of architecture and/or instruction set. For example, some of the cores 2302A-N may be in order (e.g., like that shown in figures 17A and 17B) while others are out-of-order (e.g., like that shown in figure 18). As another example, two or more of the cores 2302A-N may be capable of executing the same instruction set, while others may be capable of executing only a subset of that instruction set or a different instruction set. At least one of the cores is capable of executing the vector friendly instruction format described herein.

The processor may be a general-purpose processor, such as a Core^{™} i3, i5, i7, 2 Duo and Quad, Xeon^{™}, or Itanium^{™} processor, which are available from Intel Corporation, of Santa Clara, Calif. Alternatively, the processor may be from another company. The processor may be a special-purpose processor, such as, for example, a network or communication processor, compression engine, graphics processor, co-processor, embedded processor, or the like. The processor may be implemented on one or more chips. The processor 2300 may be a part of and/or may be implemented on one or more substrates using any of a number of process technologies, such as, for example, BiCMOS, CMOS, or NMOS.

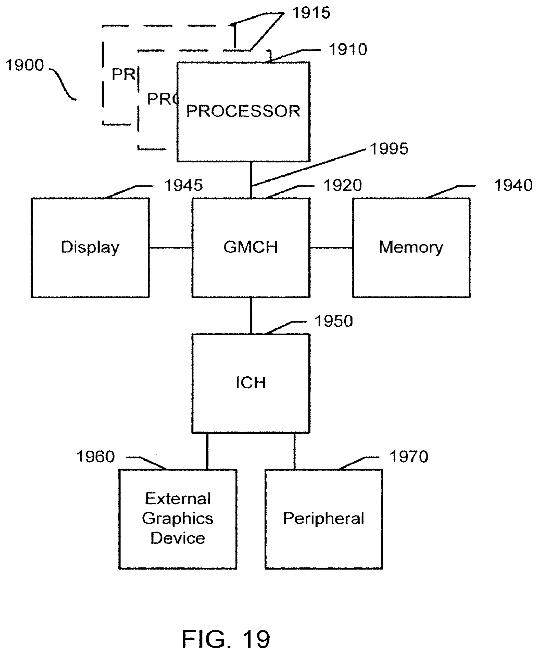

### Exemplary Computer Systems and Processors - Figures 19-22

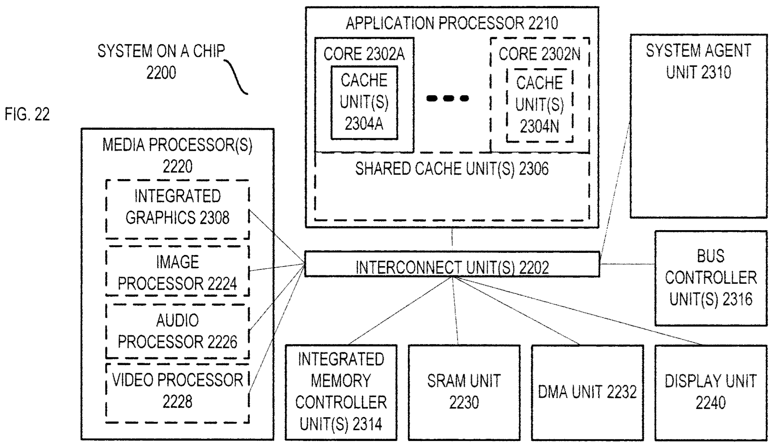

Figures 19-21 are exemplary systems suitable for including the processor 2300, Figure 22 is an exemplary system on a chip (SoC) that may include one or more of the cores 2302. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to Figure 19, shown is a block diagram of a system 1900 in accordance with one embodiment of the invention. The system 1900 may include one or more processors 1910, 1915, which are coupled to graphics memory controller hub (GMCH) 1920. The optional nature of additional processors 1915 is denoted in Figure 19 with broken lines.

Each processor 1910, 1915 may be some version of processor 2300. However, it should be noted that it is unlikely that integrated graphics logic and integrated memory control units would exist in the processors 1910, 1915.

Figure 19 illustrates that the GMCH 1920 may be coupled to a memory 1940 that may be, for example, a dynamic random access memory (DRAM). The DRAM may, for at least one embodiment, be associated with a non-volatile cache.

The GMCH 1920 may be a chipset, or a portion of a chipset. The GMCH 1920 may communicate with the processor(s) 1910, 1915 and control interaction between the processor(s) 1910, 1915 and memory 1940. The GMCH 1920 may also act as an accelerated bus interface between the processor(s) 1910, 1915 and other elements of the system 1900. For at least one embodiment, the GMCH 1920 communicates with the processor(s) 1910, 1915 via a multi-drop bus, such as a frontside bus (FSB) 1995.

Furthermore, GMCH 1920 is coupled to a display 1945 (such as a flat panel display). GMCH 1920 may include an integrated graphics accelerator. GMCH 1920 is further coupled to an input/output (I/O) controller hub (ICH) 1950, which may be used to couple various peripheral devices to system 1900. Shown for example in the embodiment of Figure 19 is an external graphics device 1960, which may be a discrete graphics device coupled to ICH 1950, along with another peripheral device 1970.

Alternatively, additional or different processors may also be present in the system 1900. For example, additional processor(s) 1915 may include additional processors(s) that are the same as processor 1910, additional processor(s) that are heterogeneous or asymmetric to processor 1910, accelerators (such as, e.g., graphics accelerators or digital signal processing (DSP) units), field programmable gate arrays, or any other processor. There can be a variety of differences between the physical resources 1910, 1915 in terms of a spectrum of metrics of merit including architectural, microarchitectural, thermal, power consumption characteristics, and the like. These differences may effectively manifest themselves as asymmetry and heterogeneity amongst the processing elements 1910, 1915. For at least one embodiment, the various processing elements 1910, 1915 may reside in the same die package.

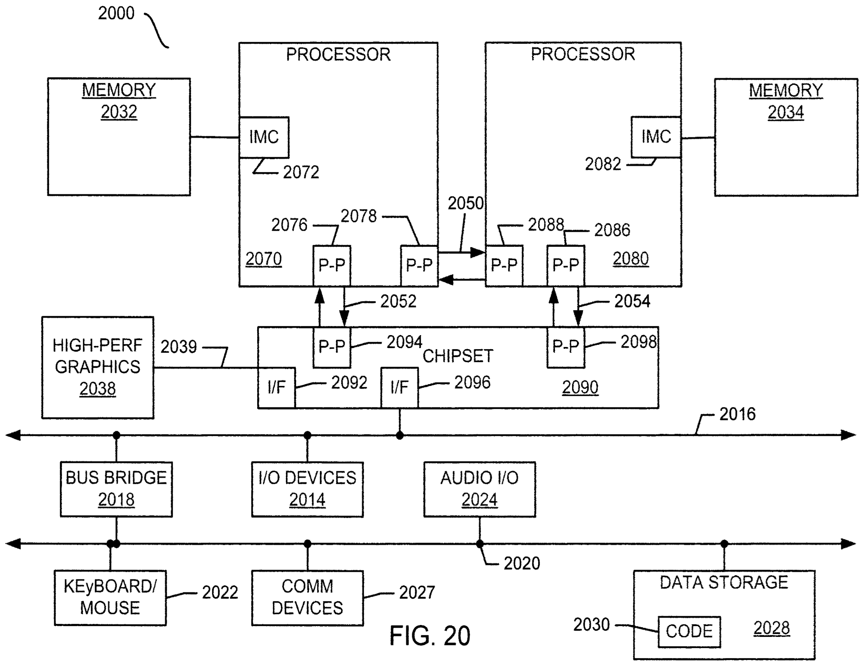

Referring now to Figure 20, shown is a block diagram of a second system 2000 in accordance with an embodiment of the present invention. As shown in Figure 20, multiprocessor system 2000 is a point-to-point interconnect system, and includes a first processor 2070 and a second processor 2080 coupled via a point-to-point interconnect 2050. As shown in Figure 20, each of processors 2070 and 2080 may be some version of the processor 2300.

Alternatively, one or more of processors 2070, 2080 may be an element other than a processor, such as an accelerator or a field programmable gate array.

While shown with only two processors 2070, 2080, it is to be understood that the scope of the present invention is not so limited. In other embodiments, one or more additional processing elements may be present in a given processor.

Processor 2070 may further include an integrated memory controller hub (IMC) 2072 and point-to-point (P-P) interfaces 2076 and 2078. Similarly, second processor 2080 may include a IMC 2082 and P-P interfaces 2086 and 2088. Processors 2070, 2080 may exchange data via a point-to-point (PtP) interface 2050 using PtP interface circuits 2078, 2088. As shown in Figure 20, IMC's 2072 and 2082 couple the processors to respective memories, namely a memory 2042 and a memory 2044, which may be portions of main memory locally attached to the respective processors.

Processors 2070, 2080 may each exchange data with a chipset 2090 via individual P-P interfaces 2052, 2054 using point to point interface circuits 2076, 2094, 2086, 2098. Chipset 2090 may also exchange data with a high-performance graphics circuit 2038 via a high-performance graphics interface 2039.

A shared cache (not shown) may be included in either processor outside of both processors, yet connected with the processors via P-P interconnect, such that either or both processors' local cache information may be stored in the shared cache if a processor is placed into a low power mode.

Chipset 2090 may be coupled to a first bus 2016 via an interface 2096. In one embodiment, first bus 2016 may be a Peripheral Component Interconnect (PCI) bus, or a bus such as a PCI Express bus or another third generation I/O interconnect bus, although the scope of the present invention is not so limited.

As shown in Figure 20, various I/O devices 2014 may be coupled to first bus 2016, along with a bus bridge 2018 which couples first bus 2016 to a second bus 2020. In one embodiment, second bus 2020 may be a low pin count (LPC) bus. Various devices may be coupled to second bus 2020 including, for example, a keyboard/mouse 2022, communication devices 2026 and a data storage unit 2028 such as a disk drive or other mass storage device which may include code 2030, in one embodiment. Further, an audio I/O 2024 may be coupled to second bus 2020. Note that other architectures are possible. For example, instead of the point-to-point architecture of Figure 20, a system may implement a multi-drop bus or other such architecture.

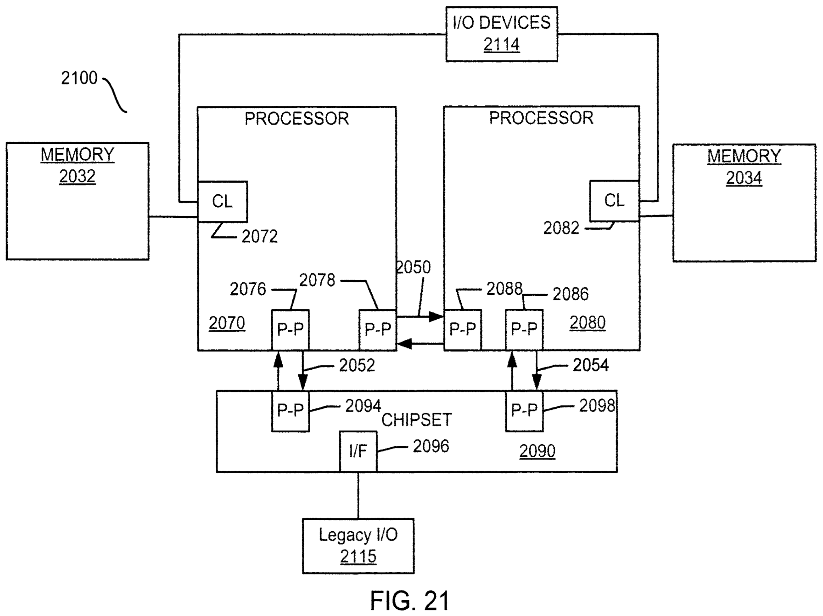

Referring now to Figure 21, shown is a block diagram of a third system 2100 in accordance with an embodiment of the present invention. Like elements in Figures 20 and 21 bear like reference numerals, and certain aspects of Figure 20 have been omitted from Figure 21 in order to avoid obscuring other aspects of Figure 21.

Figure 21 illustrates that the processing elements 2070, 2080 may include integrated memory and I/O control logic ("CL") 2072 and 2082, respectively. For at least one embodiment, the CL 2072, 2082 may include memory controller hub logic (IMC) such as that described above. In addition. CL 2072, 2082 may also include I/O control logic. Figure 21 illustrates that not only are the memories 2042, 2044 coupled to the CL 2072, 2082, but also that I/O devices 2114 are also coupled to the control logic 2072, 2082. Legacy I/O devices 2115 are coupled to the chipset 2090.

Referring now to Figure 22, shown is a block diagram of a SoC 2200 in accordance with an embodiment of the present invention. Similar elements in Figure 149 bear like reference numerals. Also, dashed lined boxes are optional features on more advanced SoCs. In Figure 22, an interconnect unit(s) 2202 is coupled to: an application processor 2210which includes a set of one or more cores 2302A-N and shared cache unit(s) 2306; a system agent unit 2310; a bus controller unit(s) 2316; an integrated memory controller unit(s) 2314; a set or one or more media processors 2220 which may include integrated graphics logic 2308, an image processor 2224 for providing still and/or video camera functionality, an audio processor 2226 for providing hardware audio acceleration, and a video processor 2228 for providing video encode/decode acceleration; an static random access memory (SRAM) unit 2230; a direct memory access (DMA) unit 2232; and a display unit 2240 for coupling to one or more external displays.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code may be applied to input data to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks (compact disk read-only memories (CD-ROMs), compact disk rewritables (CD-RWs)), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

Accordingly, embodiments of the invention also include non-transitory, tangible machine-readable media containing instructions the vector friendly instruction format or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

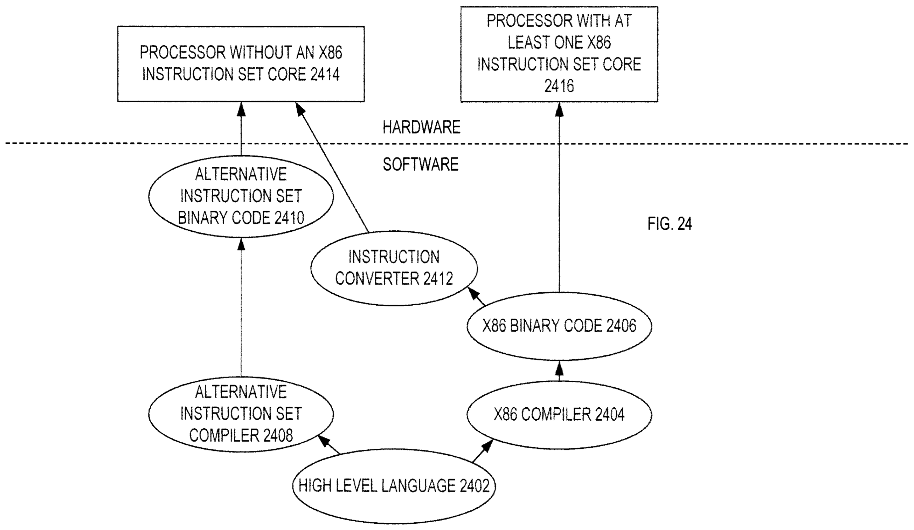

Figure 24 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 24 shows a program in a high level language 2402 may be compiled using an x86 compiler 2404 to generate x86 binary code 2406 that may be natively executed by a processor with at least one x86 instruction set core 2416 (it is assume that some of the instructions that were compiled are in the vector friendly instruction format). The processor with at least one x86 instruction set core 2416 represents any processor that can perform substantially the same functions as a Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 2404 represents a compiler that is operable to generate x86 binary code 2406 (e.g., object code) that can, with or without additional linkage processing, be executed on the processor with at least one x86 instruction set core 2416. Similarly, Figure 150 shows the program in the high level language 2402 may be compiled using an alternative instruction set compiler 2408 to generate alternative instruction set binary code 2410 that may be natively executed by a processor without at least one x86 instruction set core 2414 (e.g., a processor with cores that execute the MIPS instruction set of MIPS Technologies of Sunnyvale, CA and/or that execute the ARM instruction set of ARM Holdings of Sunnyvale, CA). The instruction converter 2412 is used to convert the x86 binary code 2406 into code that may be natively executed by the processor without an x86 instruction set core 2414. This converted code is not likely to be the same as the alternative instruction set binary code 2410 because an instruction converter capable of this is difficult to make; however, the converted code will accomplish the general operation and be made up of instructions from the alternative instruction set. Thus, the instruction converter 2412 represents software, firmware, hardware, or a combination thereof that, through emulation, simulation or any other process, allows a processor or other electronic device that does not have an x86 instruction set processor or core to execute the x86 binary code 2406.

Certain operations of the instruction(s) in the vector friendly instruction format disclosed herein may be performed by hardware components and may be embodied in machine-executable instructions that are used to cause, or at least result in, a circuit or other hardware component programmed with the instructions performing the operations. The circuit may include a general-purpose or special-purpose processor, or logic circuit, to name just a few examples. The operations may also optionally be performed by a combination of hardware and software. Execution logic and/or a processor may include specific or particular circuitry or other logic responsive to a machine instruction or one or more control signals derived from the machine instruction to store an instruction specified result operand. For example, embodiments of the instruction(s) disclosed herein may be executed in one or more the systems of Figures 19-22 and embodiments of the instruction(s) in the vector friendly instruction format may be stored in program code to be executed in the systems. Additionally, the processing elements of these figures may utilize one of the detailed pipelines and/or architectures (e.g., the in-order and out-of-order architectures) detailed herein. For example, the decode unit of the in-order architecture may decode the instruction(s), pass the decoded instruction to a vector or scalar unit, etc.

The above description is intended to illustrate preferred embodiments of the present invention. From the discussion above it should also be apparent that especially in such an area of technology, where growth is fast and further advancements are not easily foreseen, the invention can may be modified in arrangement and detail by those skilled in the art without departing from the principles of the present invention within the scope of the accompanying claims and their equivalents. For example, one or more operations of a method may be combined or further broken apart.

Some implementations described below perform load and store operations using forward progress tracking. In particular, a new family of strided load and store instructions track progress of corresponding load/store operations with a forward progress tracker in an opmask/writemask register (e.g., k0-k7) or other control register or mask register. Implementations of the strided load/store instructions read or write a specified number of data elements (e.g., four 128-bit data elements for a 512-bit register). When used as an input for progress tracking, a progress indication stored in the opmask register is read by a strided load/store instruction to determine the next element to be processed. When used as an output, the opmask register is written (e.g., responsive to corresponding loads/stores) to indicate the last data element successfully processed (e.g., successfully loaded/stored by a strided load/store instruction). This indication may subsequently be used to restart the load/store operation from the point at which an interruption occurred (e.g., when the load/store operation was interrupted due to a fault or other exception condition). In some implementations, the indication in the opmask register is zero when all elements have been processed.

In some implementations, the progress indication comprises the data element index of the first data element that was not completed. For example, if the progress indication is set to 1, this means that the first data element (element 0) was successfully loaded/stored but the next data element (element 1) was not. Alternatively, in some implementations, the progress indication may comprise a bitmask in which each bit corresponds to a data element. As each data element is successfully loaded/stored its corresponding bit is set to 0 (or 1, depending on how the bitmask is implemented) as an indication of successful completion.

The implementations described herein which perform progress tracking may or may not use an opmask register to store a writemask, as described above with respect to FIGS. 1-13. If a writemask is used in combination with progress tracking, the writemask and progress tracking bits may both be stored in the same opmask register (e.g., register K0) or using multiple opmask registers (e.g., k0 for storing the progress tracking bits and k1 for storing the writemask). Alternatively, a different register or set of registers may be used to store the progress tracking bits and/or the writemask (e.g., an xmm register, a control/status register, etc).

Under nominal conditions, the default indication in the opmask register is zero as an input and remains zero as an output. Thus, once the opmask register is initialized to zero before a sequence of strided loads/stores, it does not need to be written again during the entire sequence, meaning that there is no overhead required to re-initialize.

In workloads that operate on multi-dimensional arrays, such as AI workloads operating on neural network weight matrices, multiple small blocks of data are often loaded, concatenated, and placed into the same vector register, such as a 512-bit vector register (a zmm register in some implementations) which stores packed matrix data elements. Typically, the blocks of data will either be contiguous, in which case one contiguous block of memory is loaded, or the blocks are spaced evenly, e.g., along a column of a matrix A Reading such regularly-spaced data is known as a strided load and writing such a pattern is known as a strided store.

There are currently two types of vector load instructions: (1) those which load a single contiguous block of data, including variants which allow the data to be shuffled with data already stored in the destination register, and (2) those which load a set of data elements addressed by a base address + scale * index, where each element has a unique index. Type (2), known as a gather instruction, requires a vector of indices to be passed into the instruction. A gather instruction can be used to perform a strided load; however, this requires overhead as individual indices are generated for each element.

One implementation of a gather instruction is designed specifically for strided loads, allowing the memory execution circuitry to generate the set of addresses for the elements using a base address, scale, and stride by iteratively adding the product of (stride * element size) to the base address. That is, rather than passing a vector of indices, one per element, the memory execution circuitry generates the vector automatically, based on a few scalar values. This can provide a performance boost and/or simplify software by allowing the software to skip the generation of the index vector.

With no interruption, these gather/scatter implementations read or write all elements whose mask bits are set in the completion mask. However, since these instructions may need to touch several elements that may be spread across different physical memory pages, there is a nontrivial chance that one or more elements trigger an exception, such as a page fault. When conventional load/store instructions trigger a page fault, they simply make no architectural change (i.e., no change to any register or memory contents) and deliver the fault. However, if the gather/scatter implementations described herein were to do this, an infinite loop could result. For example, the instruction may (1) fault on the first element, (2) have the OS fetch that first page, (3) retry the instruction from the beginning and fault on the second element, (4) have the OS fetch that second page and evict the first page, and restart at step (1). To avoid this scenario, some implementations of the gather and scatter instructions can make partial forward progress after completing loads/stores for a subset of data elements when the fault is delivered, updating the mask bits as each corresponding data element is successfully loaded/stored. In some implementations, the mask bits for the completed data elements are cleared (i.e., set to 0) so that when the instruction is subsequently executed, it bypasses those data elements, guaranteeing forward progress. Alternatively, in some implementations, the progress tracking indication comprises a data element index of the first data element that was not successfully loaded/stored.

In dense compute kernels used such as those used in machine learning workloads, the common case is that all data elements are read for a strided load. Thus, the completion mask must be set by software to all ones before the gather or scatter is executed. Assuming there are no faults, the strided load or store executes and the mask bits are set to zero on instruction completion.

Some implementations described herein reduce the overhead of setting the completion mask to all ones before every strided load or store. For a sufficiently wide core, this process (e.g., a single instruction to set an opmask register to all ones) is not a hindrance to high performance. However, these instructions can make up a significant fraction of total number of executed instructions - up to 30% in some cases, wasting significant power. Further, for a core that is narrower than the highest performance cores, this can also significantly tax performance.

In some implementations, an instruction set architecture (ISA) definition for forward progress tracking is provided such that strided loads and stores do not need to be restarted from scratch after a number of data elements have already been loaded/stored at the time of an exception condition. While several implementations are described below in the context of load operations, the underlying principles can be applied equally to stores.

In accordance with some implementations, a family of strided load and store instructions use an opmask register (sometimes called a k register) to store a scalar value for progress tracking. The load/store instructions may be configured for various destination vector register sizes (e.g., 128-bit, 256-bit, 512-bit) and data element sizes (e.g., 8-bit, 16-bit, 32-bit, ..., 256-bit). The register/element size may be indicated by the opcode of the instruction. Alternatively, or additionally, a control field or immediate may be configured to indicate the vector register and data element sizes.

Some implementations of the strided load instruction are represented by the pneumonic:
loadstride dest, [base, scale * stride] + displacement, k

In addition, some embodiments of the strided store instruction are represented by the pneumonic:
storestride [base, scale * stride] + displacement, src, k:

For the loadstride instruction, dest indicates the destination register to which a corresponding plurality of data elements are loaded, as indicated by the base, scale, stride and displacement values. Similarly, for the storestride instruction, src indicates the source register from which a corresponding plurality of data elements are to be read and stored to the memory subsystem, at locations indicated by the base, scale, stride and displacement values. In both implementations, the k field indicates the opmask register which will be updated in response to a successful load/store of each respective data element. As mentioned, as each data element is loaded/stored, a corresponding bit in the opmask register, identified by the k field, may be set to 0 (or 1, depending on the bitmask definition).

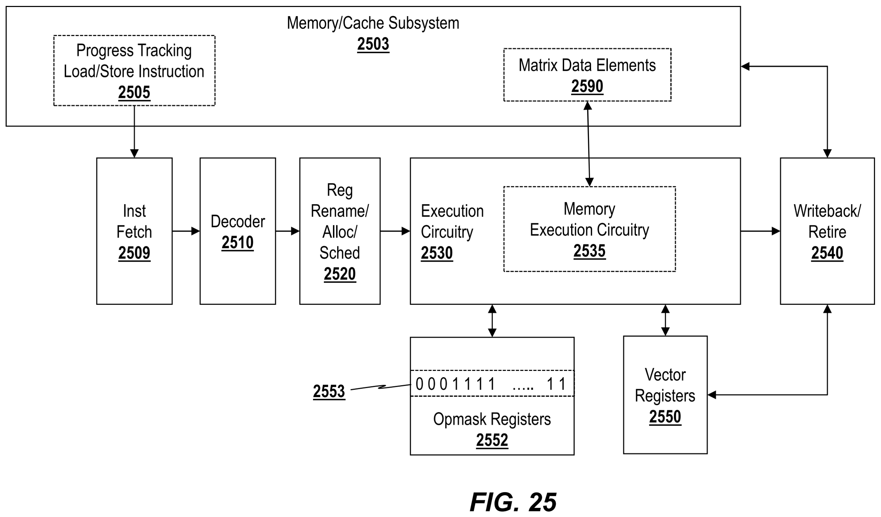

**FIG. 25** is a block diagram of an embodiment of a processor 2500 or a core of a processor (e.g., the core shown in FIG. 18) that is operative to perform an implementation of a progress tracking load/store instruction 2505 as described herein. An instruction fetch circuit 2509 fetches the load/store instruction 2505 from a memory/cache subsystem 2503 (e.g., from system memory, the L1 instruction cache 1824, etc). The progress tracking load/store instruction 2505 may represent a macroinstruction, machine code instruction, or other instruction of an instruction set of a processor. The progress tracking load/store instruction 2505 may have various formats or encodings, such as, for example, those described with respect to FIGS. 14A-15B). The encodings may include one or more fields for an opcode that at least partially or fully specifies the operation to be performed (e.g., load/store and update progress tracking bits) and one or more fields for one or more operands, such as operands usable to identify source/destination registers and memory locations, and a field to indicate an opmask register to use for progress tracking.

Decoder circuitry 2510 (e.g., an instruction decoder) may be coupled to receive and decode each progress tracking load/store instruction 2505 fetched from the cache/memory subsystem 2503 into one or more lower-level control signals, operations, or decoded instructions (e.g., one or more micro-instructions, micro-operations, microcode entry points, etc.). The decoder circuitry 2510 may operate as described above with respect to the decode unit 1832 in FIG. 18.

In some examples, register renaming, allocation, and/or scheduling circuitry 2520 may provide functionality for one or more of: (1) renaming logical operand values to physical operand values (e.g., a register alias table in some examples); (2) allocating status bits and flags to the decoded instruction; and (3) scheduling the decoded instruction for execution by execution circuitry out of an instruction pool (e.g., using a reservation station in some examples). One or more vector registers 2550 may store source data elements to be scattered to the memory/cache subsystem 2503 or destination data elements gathered from the memory/cache subsystem 2503 as described herein. In some implementations, for example, the data elements are 32-bit, 64-bit, or 128-bit data elements and the vector registers 2550 are 512-bit vector registers (e.g., zmm registers), capable of storing four 128-bit data elements, eight 64-bit data elements, or 16 32-bit data elements.

As mentioned, the progress tracking load/store instruction 2505 may include a field to identify a particular opmask register of a set of opmask registers 2552 in which to read and write progress tracking data 2553.

The execution circuitry 2530 may be coupled with the decoder circuitry 2510, register rename/allocate/scheduler circuitry 2520, the vector registers 2550, and the memory/cache subsystem 2503. The execution circuitry 2530 includes memory execution circuitry 2535 to perform the operations described herein for executing the progress tracking load/store instruction 2505, including writing the progress tracking data 2553 upon a successful load/store of a matrix data element 2590 and reading the progress tracking data 2553 when restarted (e.g., to determine the point from which to continue the load/store operations).

By way of example, and not limitation, one embodiment of a progress tracking strided load instruction operates in accordance with the following code sequence:

```
      VECTOR_LENGTH is the width of the destination SIMD register (in bits).
      ELEMENT_SIZE is the size of a data element (in bits).
      DISP is the optional displacement.
      START is the index of the starting element for the instruction
      FOR j ← START TO VECTOR_LENGTH/ELEMENT_SIZE
            i ← j*ELEMENT_SIZE
            DEST[i+ELEMENT_SIZE-1:i] ← MEM[BASE_ADDR + SignExtend((STRIDE *
            SCALE * j) + DISP])
      ENDFOR
      START ← 0
```

The progress tracking strided store instruction (storestride) also operates as shown in the above code sequence, but with the second line of the for loop flipped so that data is written from the source vector register to the memory subsystem.

When a strided load/store instruction is interrupted (e.g., by a page fault), then:
i. Completed elements are written to either the destination vector register 2550 (for a load) or to the memory/cache subsystem 2503 (for a store).
ii. The opmask register 2552 identified by the instruction is set to the element index of the first element that was not completed. Alternatively, if a bitmask is used the bits corresponding to completed elements are set to zero.

For example, if a load stride instruction begins to execute and has a page fault on element 1, the memory execution circuitry 2535 reads data element 0 from memory 2503, writing the value to the lower bits of the destination vector register 2550, and sets the START register (e.g., the opmask register) to 1. When the fault handler completes and returns, the load stride instruction is re-executed with a START value of 1, skipping over element 0 and leaving that part of the destination register untouched.

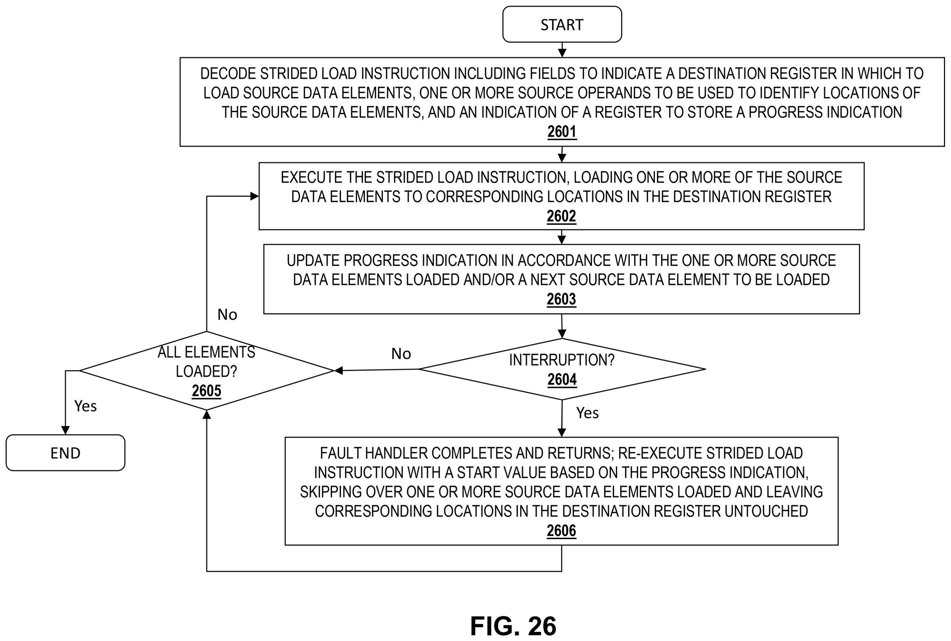

A method in accordance with some embodiments of the invention is illustrated in **FIG. 26****.** The method may be implemented on the various architectures described herein, but is not limited to any particular processor or system architecture.

At 2601, a progress tracking strided load instruction is decoded (e.g., a strided gather instruction), the instruction including fields to indicate a destination vector register in which to load source data elements, such as matrix data elements. The progress tracking strided load instruction includes one or more source operands to be used to identify locations of the source data elements (e.g., within the memory/cache subsystem), and an indication of a register to store a progress indication, such as an opmask register in some implementations. For example, the one or more source operands may indicate [base, scale * stride] values and a displacement value and a k register field may be specified to store the progress indication.

At 2602, the strided load instruction is executed, loading one or more of the source data elements to corresponding locations in the destination vector register and, at 2603, the progress indication is updated in accordance with the one or more source data elements loaded and/or a next source data element to be loaded. In some implementations, the progress indication comprises the data element index of the first data element that was not completed. For example, if the progress indication is set to 1, this means that the first data element (element 0) was successfully loaded but the next data element (element 1) was not. Alternatively, in some implementations, the progress indication may comprise a bitmask in which each bit corresponds to a data element. As each data element is successfully loaded its corresponding bit is set to 0 (or 1, depending on how the bitmask is implemented) as an indication of successful completion.

If the instruction is interrupted, at 2604 (e.g., by a page fault), then at 2606, when the fault handler completes and returns, the strided load instruction is re-executed with a START value based on the progress indication. The progress indication is read from the specified register and one or more corresponding source data elements are skipped, leaving corresponding locations in the destination register untouched.

At 2605, when all source data elements have been loaded to the destination, the process ends.

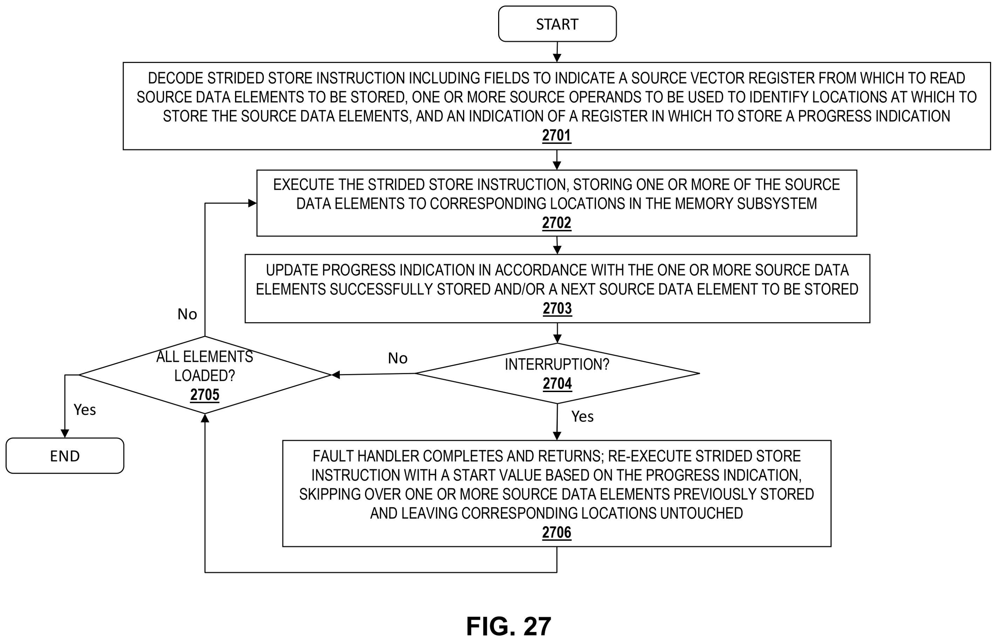

A method in accordance with some embodiments of the invention is illustrated in **FIG. 27****.** The method may be implemented on the various architectures described herein, but is not limited to any particular processor or system architecture.

At 2701, a progress tracking strided store instruction (e.g., a strided scatter instruction) is decoded, the instruction including fields to indicate a source vector register from which to read source data elements (e.g., matrix data elements) to be stored. The progress tracking strided store instruction includes one or more source operands to be used to identify locations of the source data elements (e.g., within the memory/cache subsystem), and an indication of a register to store a progress indication, such as an opmask register in some implementations. For example, the one or more source operands may indicate [base, scale * stride] values and a displacement value and a k register field may be specified to store the progress indication.

At 2702, the strided store instruction is executed, storing one or more of the source data elements to corresponding memory locations and, at 2703, the progress indication is updated in accordance with the one or more source data elements stored and/or a next source data element to be stored. In some implementations, the progress indication comprises the data element index of the first data element that was not successfully stored. For example, if the progress indication is set to 1, this means that the first data element (element 0) was successfully stored but the next data element (element 1) was not. Alternatively, in some implementations, the progress indication may comprise a bitmask in which each bit corresponds to a data element. As each data element is successfully stored its corresponding bit is set to 0 (or 1, depending on how the bitmask is implemented) as an indication of successful store.

If the instruction is interrupted, at 2704 (e.g., by a page fault), then at 2706, when the fault handler completes and returns, the strided store instruction is re-executed with a START value based on the progress indication. The progress indication is read from the specified register and one or more corresponding source data elements are skipped, leaving corresponding locations in the destination register untouched.

At 2705, when all source data elements have been stored to the destination, the process ends.

Embodiments of the invention described herein target the elimination of multiple load instructions directed to the same cache line as a prior load instruction to improve load bandwidth and power and to reduce latency for the dependents of eliminated loads. In contrast, prior implementations either focus exclusively on latency reduction or elimination of constant loads. In addition, with elimination of load instruction execution, the number of load ports virtually increases because the eliminated instructions do not access the load ports. By virtue of eliminating load execution, these embodiments provide a higher load execution bandwidth for non-eliminated loads, resulting in a reduction in the need for the growth of costly load ports in future cores.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

### EXAMPLES

The following are example implementations of different embodiments of the invention.

Example 1. A processor, comprising: decode circuitry to decode a progress tracking strided load instruction including fields to indicate a destination vector register in which to load source data elements, memory locations of the source data elements, and a register to store a progress indication; and execution circuitry to initiate execution of the strided load instruction, the execution circuitry to: load one or more of the source data elements to corresponding locations in the destination vector register; update the progress indication in accordance with the one or more source data elements successfully loaded or a next source data element to be loaded; and in response to an interruption of the progress tracking strided load instruction, re-starting the execution of the instruction from an execution point determined based on the progress indication.

Example 2. The processor of example 1, wherein the execution circuitry, upon re-starting the execution of the progress tracking strided load instruction, is to load the next source data element and skipping over the one or more source data elements successfully loaded.

Example 3. The processor of examples 1 or 2, wherein the progress indication comprises a scalar index value usable to identify the next source data element to be loaded.

Example 4. The processor of any of examples 1-3, wherein the progress indication comprises a bitmask, each bit in the bitmask corresponding to one of the source data elements to be set to a defined value when a corresponding source data element is successfully loaded.

Example 5. The processor of any of examples 1-4, wherein the register to store the progress indication comprises an opmask register.

Example 6. The processor of any of examples 1-5, wherein the source data elements comprise one of 4-bit, 8-bit, 16-bit, 32-bit, 64-bit, 128-bit, or 256-bit data elements and the destination vector register comprises a 512-bit vector register.

Example 7. A processor, comprising: decode circuitry to decode a progress tracking strided store instruction including fields to indicate a plurality of destination memory locations in which to store a corresponding plurality of source data elements, a vector register from which to read the corresponding plurality of source data elements, and a register to store a progress indication; execution circuitry to initiate execution of the progress tracking strided store instruction, the execution circuitry to: store one or more of the source data elements to corresponding destination memory locations; update the progress indication in accordance with the one or more source data elements successfully stored or a next source data element to be stored; and in response to an interruption of the execution of the strided store instruction, re-starting the execution of the strided store instruction from an execution point based on the progress indication.

Example 8. The processor of example 7, wherein the execution circuitry, upon re-starting the execution of the progress tracking strided store instruction, is to store the next source data element and skipping over the one or more source data elements successfully stored.

Example 9. The processor of examples 7 or 8, wherein the progress indication comprises a scalar index value usable to identify the next source data element to be stored.

Example 10. The processor of any of examples 7-9, wherein the progress indication comprises a bitmask, each bit in the bitmask corresponding to one of the source data elements to be set to a defined value when a corresponding source data element is successfully stored.

Example 11. The processor of any of examples 7-10, wherein the register to store the progress indication comprises an opmask register.

Example 12. The processor of any of examples 7-11, wherein the source data elements comprise one of 4-bit, 8-bit, 16-bit, 32-bit, 64-bit, 128-bit, or 256-bit data elements and the destination vector register comprises a 512-bit vector register.

Example 13. A method, comprising: decoding a progress tracking strided load instruction including fields to indicate a destination vector register in which to load source data elements, memory locations of the source data elements, and a register to store a progress indication; initiating execution of the progress tracking strided load instruction; loading one or more of the source data elements to corresponding locations in the destination vector register; updating the progress indication in accordance with the one or more source data elements loaded or a next source data element to be loaded; and in response to an interruption of the execution of the progress tracking strided load instruction, re-starting the execution of the instruction from an execution point based on the progress indication.

Example 14. The method of example 13, wherein re-starting the execution of the progress tracking strided load instruction comprises loading the next source data element and skipping over the one or more source data elements successfully loaded.

Example 15. The method of examples 13 or 14, wherein the progress indication comprises a scalar index value usable to identify the next source data element to be loaded.

Example 16. The method of any of examples 13-15, wherein the progress indication comprises a bitmask, each bit in the bitmask corresponding to one of the source data elements to be set to a defined value when a corresponding source data element is successfully loaded.

Example 17. The method of any of examples 13-16, wherein the register to store the progress indication comprises an opmask register.

Example 18. The method of any of examples 13-17, wherein the source data elements comprise one of 4-bit, 8-bit, 16-bit, 32-bit, 64-bit, 128-bit, or 256-bit data elements and the destination vector register comprises a 512-bit vector register.

Example 19. A machine-readable medium having program code stored thereon which, when executed by a machine, causes the machine to perform operations comprising: decoding a progress tracking strided load instruction including fields to indicate a destination vector register in which to load source data elements, memory locations of the source data elements, and a register to store a progress indication; initiating execution of the progress tracking strided load instruction; loading one or more of the source data elements to corresponding locations in the destination vector register; updating the progress indication in accordance with the one or more source data elements loaded or a next source data element to be loaded; and in response to an interruption of the execution of the progress tracking strided load instruction, re-starting the execution of the instruction from an execution point based on the progress indication.

Example 20. The machine-readable medium of example 17, wherein re-starting the execution of the progress tracking strided load instruction comprises loading the next source data element and skipping over the one or more source data elements successfully loaded

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor, comprising:
decode circuitry to decode a progress tracking strided load instruction including fields to indicate a destination vector register in which to load source data elements, memory locations of the source data elements, and a register to store a progress indication; and
execution circuitry to initiate execution of the strided load instruction, the execution circuitry to:
load one or more of the source data elements to corresponding locations in the destination vector register;
update the progress indication in accordance with the one or more source data elements successfully loaded or a next source data element to be loaded; and
in response to an interruption of the progress tracking strided load instruction, re-starting the execution of the instruction from an execution point determined based on the progress indication.

2. The processor of claim 1, wherein the execution circuitry, upon re-starting the execution of the progress tracking strided load instruction, is to load the next source data element and skipping over the one or more source data elements successfully loaded.

3. The processor of claims 1 or 2, wherein the progress indication comprises a scalar index value usable to identify the next source data element to be loaded.

4. The processor of any one of claims 1 to 3, wherein the progress indication comprises a bitmask, each bit in the bitmask corresponding to one of the source data elements to be set to a defined value when a corresponding source data element is successfully loaded.

5. The processor of any one of claims 1 to 4, wherein the register to store the progress indication comprises an opmask register.

6. The processor of any one of claims 1 to 5, wherein the source data elements comprise one of 4-bit, 8-bit, 16-bit, 32-bit, 64-bit, 128-bit, or 256-bit data elements and the destination vector register comprises a 512-bit vector register.

7. A processor, comprising:
decode circuitry to decode a progress tracking strided store instruction including fields to indicate a plurality of destination memory locations in which to store a corresponding plurality of source data elements, a vector register from which to read the corresponding plurality of source data elements, and a register to store a progress indication;
execution circuitry to initiate execution of the progress tracking strided store instruction, the execution circuitry to:
store one or more of the source data elements to corresponding destination memory locations;
update the progress indication in accordance with the one or more source data elements successfully stored or a next source data element to be stored; and
in response to an interruption of the execution of the strided store instruction, re-starting the execution of the strided store instruction from an execution point based on the progress indication.

8. The processor of claim 7, wherein the execution circuitry, upon re-starting the execution of the progress tracking strided store instruction, is to store the next source data element and skipping over the one or more source data elements successfully stored.

9. The processor of claims 7 or 8, wherein the progress indication comprises a scalar index value usable to identify the next source data element to be stored.

10. The processor of any one of claims 7 to 9, wherein the progress indication comprises a bitmask, each bit in the bitmask corresponding to one of the source data elements to be set to a defined value when a corresponding source data element is successfully stored.

11. The processor of any one of claims 7 to 10, wherein the register to store the progress indication comprises an opmask register.

12. The processor of any one of claims 7 to 11, wherein the source data elements comprise one of 4-bit, 8-bit, 16-bit, 32-bit, 64-bit, 128-bit, or 256-bit data elements and the destination vector register comprises a 512-bit vector register.

13. A method, comprising:
decoding a progress tracking strided load instruction including fields to indicate a destination vector register in which to load source data elements, memory locations of the source data elements, and a register to store a progress indication;
initiating execution of the progress tracking strided load instruction;
loading one or more of the source data elements to corresponding locations in the destination vector register;
updating the progress indication in accordance with the one or more source data elements loaded or a next source data element to be loaded; and
in response to an interruption of the execution of the progress tracking strided load instruction, re-starting the execution of the instruction from an execution point based on the progress indication.

14. The method of claim 13, wherein re-starting the execution of the progress tracking strided load instruction comprises loading the next source data element and skipping over the one or more source data elements successfully loaded.

15. The method of claims 13 or 14, wherein the progress indication comprises a scalar index value usable to identify the next source data element to be loaded.
